# EUROPÄISCHE PATENTSCHRIFT

(11) **EP 1 529 817 B1**
(45) Veröffentlichungstag und Bekanntmachung des Hinweises auf die Patenterteilung: **11.04.2007**
(21) Anmeldenummer: 04022006.3
(22) Anmeldetag: 16.09.2004
(51) Int. Cl.: C09B 67/22, D06P 3/24

(54) **Verfahren zum Mono-, Di- oder Trichromie-Färben oder Bedrucken von natürlichen oder synthetischen Polyamidfasermaterialien**
Process for mono-, di- and trichromie dyeing and printing of natural and synthetic polyamide material
Procédé de teinture et d'impression mono-, di- et trichromique des materiaux polyamide naturels ou synthétiques

(30) Priorität: 24.09.2003 DE 10344127
(43) Veröffentlichungstag der Anmeldung: 11.05.2005
(73) Patentinhaber: DyStar Textilfarben GmbH & Co. Deutschland KG, 65926 Frankfurt am Main (DE)
(72) Erfinder: Ehrenberg, Stefan, Dr., 65795 Hattersheim (DE); Giehl, Andreas, Dr., 65527 Niedernhausen (DE); Wörner, Jörg, 63486 Bruchköbel (DE)

(56) Entgegenhaltungen:
- EP-A- 1 247 842
- EP-A- 1 275 700
- US-A- 4 693 727
- US-B1- 6 168 636
- US-B1- 6 238 442

## Beschreibung

Die vorliegende Erfindung liegt auf dem Gebiet der Reaktivfarbstoffe und betrifft Verfahren zum Mono-, Di- oder Trichromie-Färben oder -Bedrucken von natürlichen oder synthetischen Polyamidfasermaterialien und dazu geeignete Farbstoffmischungen.

Die EP 1 275 700 A2 beschreibt ein Verfahren zum Trichromie-Färben und -Bedrucken von synthetischen Polyamidfasermaterialien, das dadurch gekennzeichnet ist, dass man einen rotfärbenden Reaktivfarbstoff, einen gelboder orangefärbenden Reaktivfarbstoff und einen blaufärbenden Reaktivfarbstoff einsetzt.

Die Erfahrung zeigt, dass zumindest auf dem Gebiet des Mono-, Di- oder Trichromie-Färbens und -Bedruckens von Wolle Einzelfarbstoffe ausgeprägte Schwächen aufweisen. Eine Mono-, Di- und Trichromie für Wolle, die die Bedürfnisse des Marktes zufrieden stellt, konnte bisher nicht zur Verfügung gestellt werden.

Überraschenderweise konnte nun gefunden werden, dass diese Lücke gefüllt werden kann, wenn man als blaue, gelbe bzw. rote Farbkomponente jeweils Mischungen aus ausgewählten Reaktivfarbstoffen einsetzt.

Die vorliegende Erfindung betrifft somit ein Verfahren zum Mono-, Di- oder Trichromie-Färben und -Bedrucken von natürlichen und synthetischen Polyamidfasermaterialien, dadurch gekennzeichnet, dass man
a) eine blaufärbende Farbstoffmischung enthaltend mindestens einen Farbstoff der allgemeinen Formel (I) 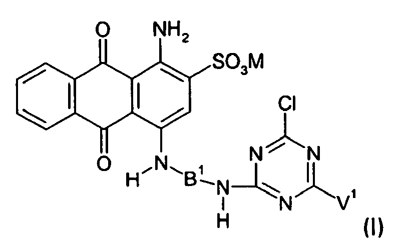 und mindestens einen Farbstoff der allgemeinen Formel (II) 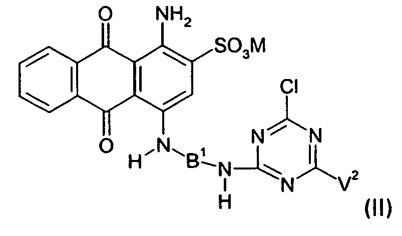 worin
   B¹ für eine Gruppe der Formel

   -CH₂-CH₂-CH₂- , -CH₂-C(CH₃)₂-CH₂-

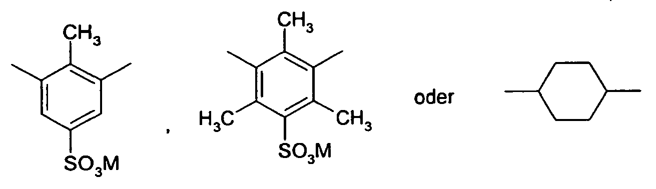

   V¹ für eine Gruppe der Formel 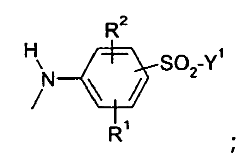 V² für eine Gruppe der Formel 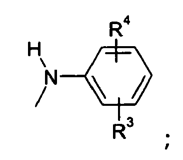 R¹, R² und R³ unabhängig voneinander für Wasserstoff, Methyl, Methoxy oder Chlor;
   R⁴ für Wasserstoff oder -SO₃M;
   Y¹ für Vinyl oder β-Sulfatoethyl; und
   M für Wasserstoff, Natrium oder Kalium
   steht; und/oder
b) eine rotfärbende Farbstoffmischung enthaltend mindestens einen Farbstoff der allgemeinen Formel (III) 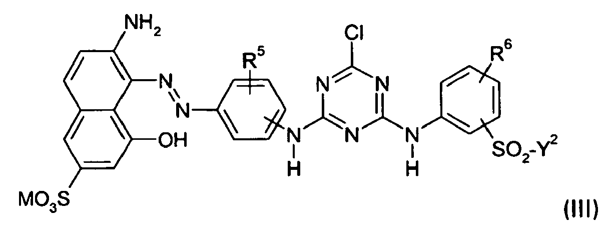 und mindestens einen Farbstoff der allgemeinen Formel (IV) 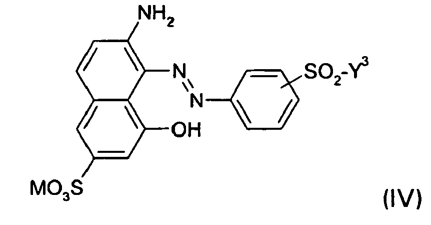 worin
   R⁵ Wasserstoff, -SO₃M, -COOM, Methyl, oder Chlor;
   R⁶ Wasserstoff, Methyl oder Methoxy;
   Y₂ und Y₃ unabhängig voneinander Vinyl oder β-Sulfatoethyl; und
   M Wasserstoff, Natrium oder Kalium
   bedeuten; und/oder
c) eine gelbfärbende Farbstoffmischung enthaltend mindestens einen Farbstoff der allgemeinen Formel (V) 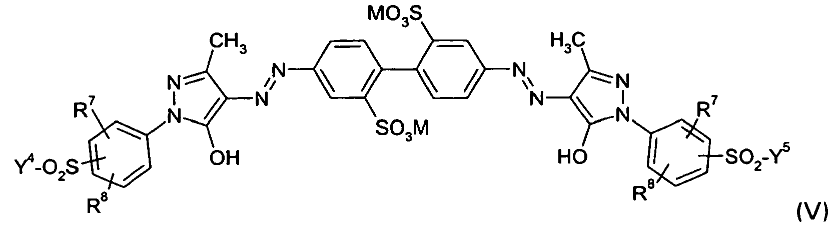 und mindestens einen Farbstoff der allgemeinen Formel (VI) 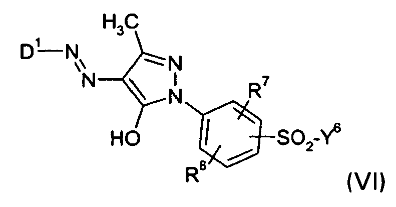 worin
   R⁷ und R⁸ Wasserstoff, Methyl, Methoxy oder -SO₃M;
   Y⁴, Y⁵ und Y⁶ unabhängig voneinander Vinyl oder β-Sulfatoethyl;
   D' eine Gruppe der Formel 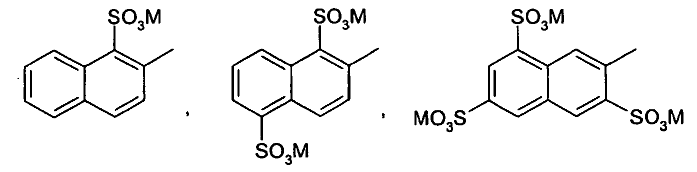 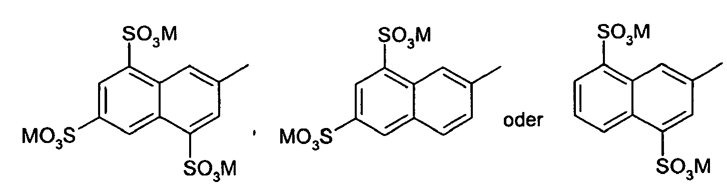 und
   M Wasserstoff, Natrium oder Kalium
   bedeuten,
   einsetzt.

In einem bevorzugten erfindungsgemäßen Verfahren enthält die blaufärbende Farbstoffmischung a) neben den Farbstoffen der allgemeinen Formeln (I) und (II) zusätzlich einen Farbstoff der allgemeinen Formel (VII) 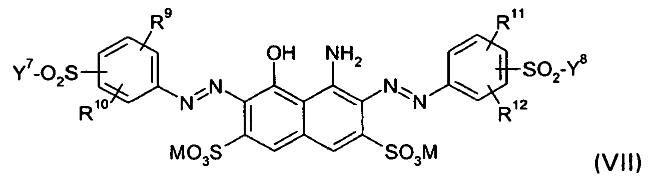 worin
R⁹, R¹⁰, R¹¹ und R¹² unabhängig voneinander Wasserstoff, Methyl, Methoxy oder Chlor;
Y⁷ und Y⁸ unabhängig voneinander Vinyl oder β-Sulfatoethyl; und
M Wasserstoff, Natrium oder Kalium
bedeuten.

In einem besonders bevorzugten erfindungsgemäßen Verfahren enthält die blaufärbende Farbstoffmischung a) die Farbstoffe der allgemeinen Formeln (I), (II) und (VII), wobei die Reste R¹, R², R³, R⁹, R¹⁰, R¹¹ und R¹² Wasserstoff bedeuten, R⁴ für -SO₃M steht und B¹ eine Gruppe der Formel 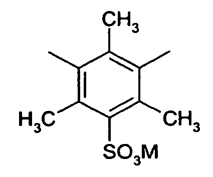 bedeutet.
Soweit die blaufärbenden Farbstoffmischungen a) nur Farbstoffe der allgemeinen Formeln (I) und (II) enthalten, beträgt der Anteil an Farbstoff der allgemeinen Formel (I) bevorzugt 10 bis 90 Gew. %, besonders bevorzugt 20 bis 80 Gew. %, und der Anteil an Farbstoff der allgemeinen Formel (II) bevorzugt 10 bis 90 Gew. %, besonders bevorzugt 20 bis 80 Gew. %, jeweils bezogen auf den Gesamtfarbstoffgehalt.
Falls die blaufärbenden Farbstoffmischungen a) neben den Farbstoffen der allgemeinen Formeln (I) und (II) auch Farbstoff der allgemeinen Formel (VII) enthalten, beträgt der Anteil an Farbstoff der allgemeinen Formel (I) bevorzugt 20 bis 70 Gew. %, der Anteil an Farbstoff der allgemeinen Formel (II) bevorzugt 10 bis 50 Gew. %, und der Anteil an Farbstoff der allgemeinen Formel (VII) bevorzugt 1 bis 50 Gew. %, jeweils bezogen auf den Gesamtfarbstoffgehalt.

In einem weiteren bevorzugten erfindungsgemäßen Verfahren enthält die rotfärbende Farbstoffmischung b) neben den Farbstoffen der allgemeinen Formeln (III) und (IV) zusätzlich einen Farbstoff der allgemeinen Formel (VIII) 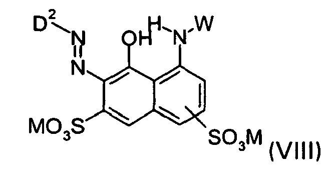 worin
W für eine Gruppe der Formel 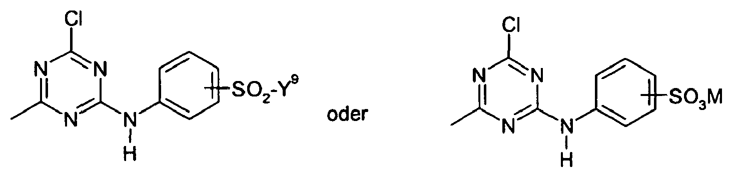 steht und falls D² einen faserreaktiven Rest enthält auch eine Gruppe der Formel 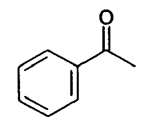 sein kann
Y⁹ Vinyl oder β-Sulfatoethyl bedeutet;
D² für eine Gruppe der Formel 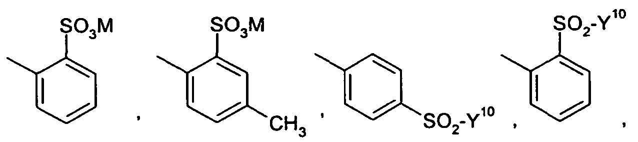 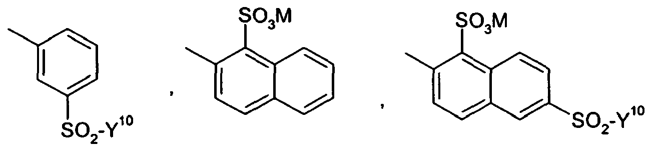 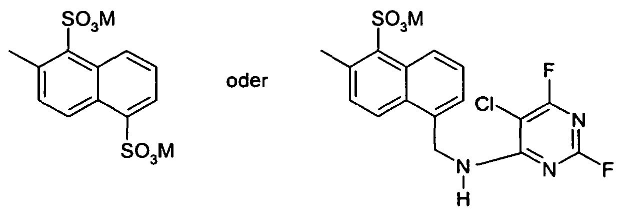 steht; und
M Wasserstoff, Natrium oder Kalium bedeutet.

In einem weiteren besonders bevorzugten erfindungsgemäßen Verfahren enthält die rotfärbende Farbstoffmischung b) die Farbstoffe der allgemeinen Formeln (III), (IV) und (VIII), wobei
R⁵ -SO₃M und R⁶ Wasserstoff bedeuten,
W für eine Gruppe der Formel 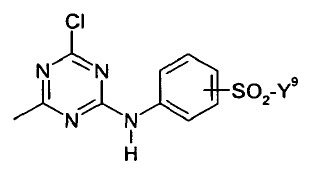 und D² für eine Gruppe der Formel 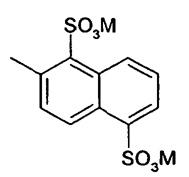 steht, wobei Y⁹ Vinyl oder β-Sulfatoethyl und M Wasserstoff, Natrium oder Kalium bedeuten.

Soweit die rotfärbenden Farbstoffmischungen b) nur Farbstoffe der allgemeinen Formeln (III) und (IV) enthalten, beträgt der Anteil an Farbstoff der allgemeinen Formel (III) bevorzugt 20 bis 80 Gew. %, besonders bevorzugt 30 bis 75 Gew. %, und der Anteil an Farbstoff der allgemeinen Formel (IV) bevorzugt 20 bis 80 Gew. %, besonders bevorzugt 25 bis 70 Gew. %, jeweils bezogen auf den Gesamtfarbstoffgehalt.
Falls die rotfärbenden Farbstoffmischungen b) neben den Farbstoffen der allgemeinen Formeln (III) und (IV) auch Farbstoff der allgemeinen Formel (VIII) enthalten, beträgt der Anteil an Farbstoff der allgemeinen Formel (III) bevorzugt 30 bis 60 Gew. %, der Anteil an Farbstoff der allgemeinen Formel (IV) bevorzugt 10 bis 25 Gew. %, und der Anteil an Farbstoff der allgemeinen Formel (VIII) bevorzugt 30 bis 45 Gew. %, jeweils bezogen auf den Gesamtfarbstoffgehalt.

In einem weiteren bevorzugten erfindungsgemäßen Verfahren enthält die gelbfärbende Farbstoffmischung c) neben den Farbstoffen der allgemeinen Formeln (V) und (VI) zusätzlich einen Farbstoff der allgemeinen Formel (IX) 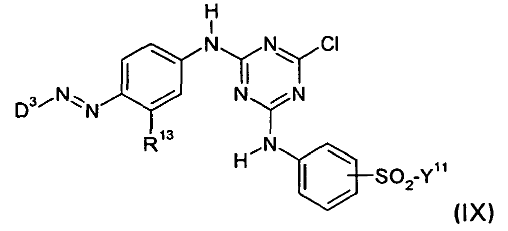 worin
R¹³ (C₂-C₄)-Alkanoylamino, Ureido, Sulfamoyl oder Acetyl;
Y¹¹ Vinyl oder β-Sulfatoethyl bedeutet; und
D³ eine der Bedeutungen von D¹ hat.

In einem weiteren besonders bevorzugten erfindungsgemäßen Verfahren enthält die gelbfärbende Farbstoffmischung c) die Farbstoffe der allgemeinen Formeln (V) und (VI), wobei
R⁷ und R⁸ Wasserstoff bedeuten;
Y⁴, Y⁵ und Y⁶ Vinyl oder β-Sulfatoethyl bedeuten;
D¹ für eine Gruppe der Formel 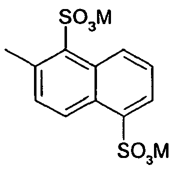 steht; und
M Wasserstoff, Natrium oder Kalium bedeutet.

Soweit die gelbfärbenden Farbstoffmischungen c) nur Farbstoffe der allgemeinen Formeln (V) und (VI) enthalten, beträgt der Anteil an Farbstoff der allgemeinen Formel (V) bevorzugt 10 bis 90 Gew. %, besonders bevorzugt 15 bis 80 Gew. %, und der Anteil an Farbstoff der allgemeinen Formel (VI) bevorzugt 10 bis 90 Gew. %, besonders bevorzugt 20 bis 85 Gew. %, jeweils bezogen auf den Gesamtfarbstoffgehalt.

Falls die rotfärbenden Farbstoffmischungen b) neben den Farbstoffen der allgemeinen Formeln (V) und (VI) auch Farbstoff der allgemeinen Formel (IX) enthalten, beträgt der Anteil an Farbstoff der allgemeinen Formel (V) bevorzugt 10 bis 30 Gew. %, der Anteil an Farbstoff der allgemeinen Formel (VI) bevorzugt 20 bis 50 Gew. %, und der Anteil an Farbstoff der allgemeinen Formel (IX) bevorzugt 20 bis 70 Gew. %, jeweils bezogen auf den Gesamtfarbstoffgehalt.

Die Farbstoffe der allgemeinen Formeln (I) bis (IX) können in Form von Mischungen von Farbstoffen vorliegen, die sich nur in der Bedeutung der Reste Y¹ bis Y¹¹ unterscheiden. Dies bedeutet, die Farbstoffe der allgemeinen Formeln (I) bis (IX) können als Vinylsulfon-Farbstoff oder als β-Sulfatoethylsulfonyl-Farbstoff oder als Mischungen aus beiden vorliegen. Bevorzugt liegen die Farbstoffe der allgemeinen Formeln (I) bis (IX) als Mischungen aus Vinylsulfon-Farbstoff und β-Sulfatoethylsulfonyl-Farbstoff vor, bei welchen der Anteil an Vinylsulfonyl-Farbstoff zu β-Sulfatoethylsulfonyl-Farbstoff im Molverhältnis zwischen 2:98 und 98:2 liegt.

In einer bevorzugten Ausführungsform des erfindungsgemäßen Verfahrens werden eine rotfärbende Farbstoffmischung b) enthaltend Farbstoffe der allgemeinen Formeln (III), (IV) und (VIII) und eine gelbfärbende Farbstoffmischung c) enthaltend Farbstoffe der allgemeinen Formeln (V), (VI) und (IX) eingesetzt. Das Gewichtsverhältnis zwischen rotfärbender und gelbfärbender Farbstoffmischung beträgt dabei bevorzugt 1 : 10000 bis 10000 : 1, besonders bevorzugt 1 : 1000 bis 1000 : 1.

In einer weiteren bevorzugten Ausführungsform des erfindungsgemäßen Verfahrens werden eine blaufärbende Farbstoffmischung a) enthaltend Farbstoffe der allgemeinen Formeln (I), (II) und (VII) und eine rotfärbende Farbstoffmischung b) enthaltend Farbstoffe der allgemeinen Formeln (III), (IV) und (VIII) eingesetzt. Das Gewichtsverhältnis zwischen blaufärbender und rotfärbender Farbstoffmischung beträgt dabei bevorzugt 1 : 10000 bis 10000 : 1, besonders bevorzugt 1 : 1000 bis 1000 : 1.

In einer weiteren bevorzugten Ausführungsform des erfindungsgemäßen Verfahrens werden eine blaufärbende Farbstoffmischung a) enthaltend Farbstoffe der allgemeinen Formeln (1), (11) und (VII) und eine gelbfärbende Farbstoffmischung c) enthaltend Farbstoffe der allgemeinen Formeln (V), (VI) und (IX) eingesetzt. Das Gewichtsverhältnis zwischen blaufärbender und gelbfärbender Farbstoffmischung beträgt dabei bevorzugt 1 : 10000 bis 10000 : 1, besonders bevorzugt 1 : 1000 bis 1000 : 1.

In einer besonders bevorzugten Ausführungsform des erfindungsgemäßen Verfahrens werden eine blaufärbende Farbstoffmischung a) enthaltend Farbstoffe der allgemeinen Formeln (I), (II) und (VII), eine rotfärbende Farbstoffmischung b) enthaltend Farbstoffe der allgemeinen Formeln (III), (IV) und (VIII) und eine gelbfärbende Farbstoffmischung c) enthaltend Farbstoffe der allgemeinen Formeln (V), (VI) und (IX) eingesetzt. Das Gewichtsverhältnis der blaufärbenden, rotfärbenden oder gelbfärbenden Farbstoffmischung zur Summe der jeweils anderen eingesetzten Farbstoffmischungen beträgt dabei bevorzugt 1 : 10000 bis 10000 : 1, besonders bevorzugt 1 : 1000 bis 1000 : 1.

Zur Ausführung des erfindungsgemäßen Verfahrens können die üblichen, in der Literatur beschriebenen und dem Fachmann bekannten Färbe- und Druckverfahren herangezogen werden (siehe zum Beispiel H.-K. Rouette, Handbuch der Textilveredelung, Deutscher Fachverlag GmbH, Frankfurt am Main).
Die Färbeflotten und Druckpasten können außer den Farbstoffen der allgemeinen Formeln (I) bis (IX) und Wasser weitere Zusätze enthalten. Zusätze sind beispielsweise Netzmittel, Antischaummittel, Egalisiermittel und die Eigenschaften des Textilmaterials beeinflussende Mittel, wie Weichmachungsmittel, Zusätze zur Flammfestausrüstung und schmutz-, wasserund ölabweisende oder wasserenthärtende Mittel. Insbesondere Druckpasten können auch natürliche oder synthetische Verdicker, wie beispielsweise Alginate und Celluloseether, enthalten.
In den Färbebädern und Druckpasten können die Farbstoffmengen je nach gewünschter Farbtiefe in weiten Grenzen variieren. Im allgemeinen liegen die Farbstoffe der allgemeinen Formeln (I) bis (IX) in Mengen von je 0,01 bis 15 Gew.%, insbesondere in Mengen von 0,1 bis 10 Gew. %, bezogen auf das Färbegut bzw. die Druckpaste vor.
Das erfindungsgemäße Verfahren ist bevorzugt ein Färbeverfahren, das insbesondere nach dem Ausziehverfahren durchgeführt wird. Vorzugsweise färbt man bei einem pH-Wert von 3 bis 7, insbesondere bei 4 bis 6. Das Flottenverhältnis kann innerhalb eines weiten Bereiches gewählt werden und liegt beispielsweise zwischen 1:5 und 1 :50, vorzugsweise zwischen 1:5 und 1 :30. Man färbt vorzugsweise bei Temperaturen von 70 bis 110°C, insbesondere von 80 bis 105°C.
Zur Erhöhung der Nassechtheiten des gefärbten Materials kann in einer Nachbehandlung nichtfixierter Farbstoff entfernt werden. Diese Nachbehandlung erfolgt insbesondere bei einem pH-Wert von 8 bis 9 und Temperaturen von beispielsweise 75 bis 85°C.
Das erfindungsgemäße Verfahren zeichnet sich beim Färben wie beim Drucken durch gleichmäßigen Farbaufbau, gutes Aufzieh- und Fixierverhalten und gute Nuancenkonstanz der Farbstoffe der allgemeinen Formeln (I) bis (IX) aus. Besonders vorteilhaft ist die sehr gute Kombinierbarkeit der genannten Farbstoffe. Die erhaltenen Färbungen und Drucke zeichnen sich außerdem durch gute Echtheiten aus, insbesondere guten Reib-, Nass-, Nassreib- und Lichtechtheiten.

Nach dem erfindungsgemäßen Verfahren können natürliche und synthetische Polyamidfasermaterialien gefärbt bzw. bedruckt werden. Unter natürlichem Polyamidfasermaterial wird vornehmlich Wolle verstanden, wo bei das erfindungsgemäße Verfahren insbesondere für waschmaschinenfest ausgerüstete Wolle hervorragend geeignet ist. Synthetische Polyamidfasermaterialien sind beispielsweise solche aus Polyamid 6 oder Polyamid 6.6.
Die genannten Polyamidfasermaterialien können in den verschiedensten Verarbeitungsformen vorliegen, beispielsweise als Faser, Garn, Gewebe oder Gewirke, insbesondere aber in Form von Teppichen.

Die in dem erfindungsgemäßen Verfahren zur Anwendung kommenden Farbstoffmischungen a), b) und c) sind neu und ebenfalls Gegenstand der vorliegenden Anmeldung.

Diese betrifft somit auch eine blaufärbende Farbstoffmischung enthaltend mindestens einen Farbstoff der allgemeinen Formel (I) 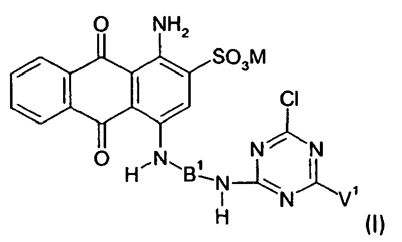 und mindestens einen Farbstoff der allgemeinen Formel (II) 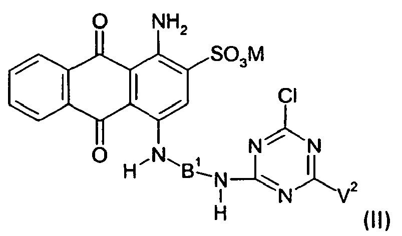 worin
B¹ für eine Gruppe der Formel

-CH₂-CH₂-CH₂- , -CH₂-C(CH₃)₂-CH₂-

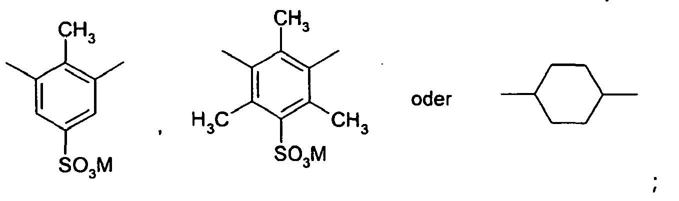

V¹ für eine Gruppe der Formel 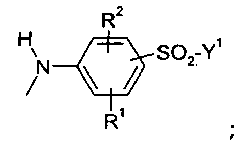 V² für eine Gruppe der Formel 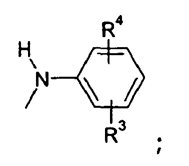 R¹, R² und R³ unabhängig voneinander für Wasserstoff, Methyl, Methoxy oder Chlor;
R⁴ für Wasserstoff oder -SO₃M;
Y¹ für Vinyl oder β-Sulfatoethyl; und
M für Wasserstoff, Natrium oder Kalium
steht.
Das Gewichtsverhältnis der Farbstoffe der allgemeinen Formel (I) und (II) beträgt bevorzugt 1 : 9 bis 9 : 1, besonders bevorzugt 1 : 4 bis 4 : 1.

Bevorzugt enthält die erfindungsgemäße blaufärbende Farbstoffmischung außerdem einen Farbstoff der allgemeinen Formel (VII) 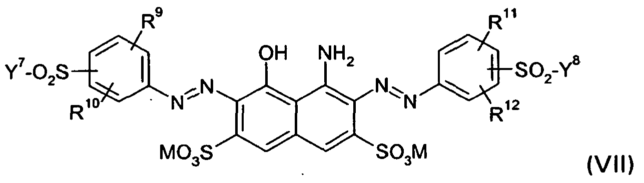 worin
R⁹, R¹⁰, R¹¹ und R¹² unabhängig voneinander Wasserstoff, Methyl, Methoxy oder Chlor;
Y⁷ und Y⁸ unabhängig voneinander Vinyl oder β-Sulfatoethyl; und
M Wasserstoff, Natrium oder Kalium
bedeuten.

Eine besonders bevorzugte erfindungsgemäße blaufärbende Farbstoffmischung enthält die Farbstoffe der allgemeinen Formeln (I), (II) und (VII), wobei die Reste R¹, R², R³, R⁹, R¹⁰, R¹¹ und R¹² Wasserstoff bedeuten, R⁴ für -SO₃M steht und B¹ eine Gruppe der Formel 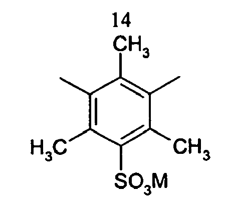 bedeutet.

Erfindungsgemäße blaufärbenden Farbstoffmischungen, die neben den Farbstoffen der allgemeinen Formeln (I) und (II) auch Farbstoff der allgemeinen Formel (VII) enthalten, enthalten den Farbstoff der allgemeinen Formel (I) bevorzugt in Mengen von 20 bis 70 Gew. %, den Farbstoff der allgemeinen Formel (II) bevorzugt in Mengen von 10 bis 50 Gew. %, und den Farbstoff der allgemeinen Formel (VII) bevorzugt in Mengen von 1 bis 50 Gew. %, jeweils bezogen auf den Gesamtfarbstoffgehalt.

Die vorliegende Erfindung betrifft des weiteren eine rotfärbende Farbstoffmischung enthaltend mindestens einen Farbstoff der allgemeinen Formel (III) 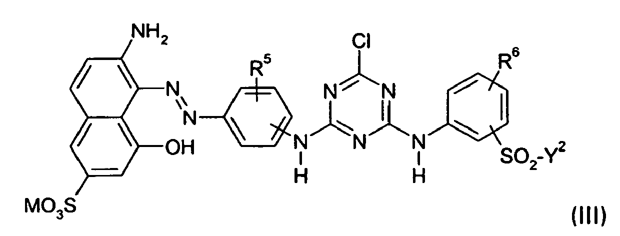 und mindestens einen Farbstoff der allgemeinen Formel (IV) 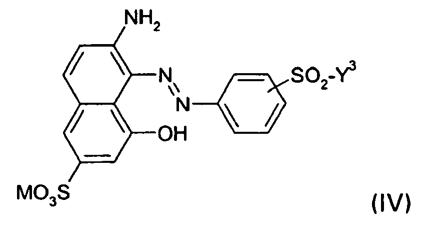 worin
R⁵ Wasserstoff, -SO₃M, -COOM, Methyl, oder Chlor;
R⁶ Wasserstoff, Methyl oder Methoxy;
Y₂ und Y₃ unabhängig voneinander Vinyl oder β-Sulfatoethyl; und
M Wasserstoff, Natrium oder Kalium
bedeuten.
Das Gewichtsverhältnis der Farbstoffe der allgemeinen Formel (III) und (IV) beträgt bevorzugt 1 : 4 bis 4 : 1, besonders bevorzugt 1 : 2,3 bis 3 : 1.

Bevorzugt enthält die erfindungsgemäße rotfärbende Farbstoffmischung außerdem einen Farbstoff der allgemeinen Formel (VIII) 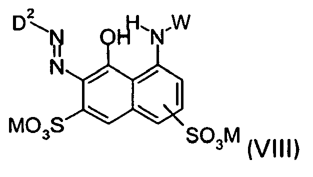 worin
W für eine Gruppe der Formel 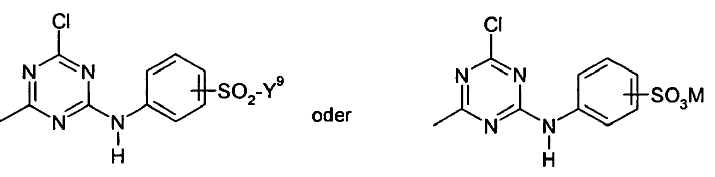 steht und falls D² einen faserreaktiven Rest enthält auch eine Gruppe der Formel 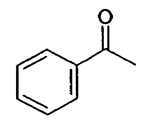 sein kann
Y⁹ Vinyl oder β-Sulfatoethyl bedeutet;
D² für eine Gruppe der Formel 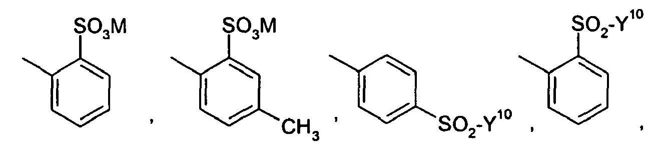 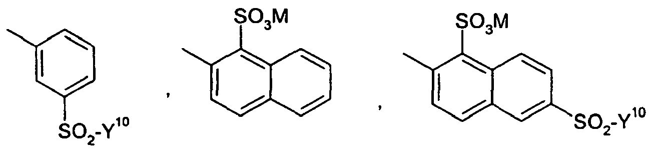 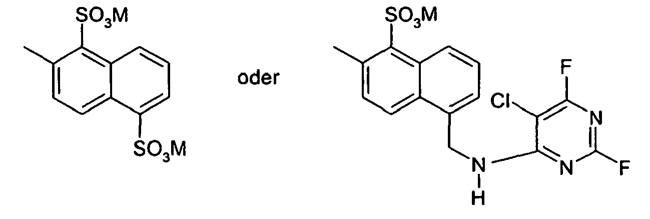 steht; und
M Wasserstoff, Natrium oder Kalium bedeutet.

Eine besonders bevorzugte erfindungsgemäße rotfärbende Farbstoffmischung enthält die Farbstoffe der allgemeinen Formeln (III), (IV) und (VIII), wobei
R⁵ -SO₃M und R⁶ Wasserstoff bedeuten,
W für eine Gruppe der Formel 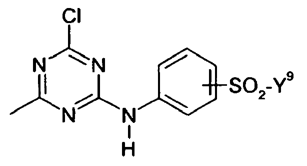 und D² für eine Gruppe der Formel 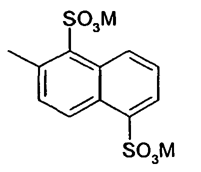 steht, wobei Y⁹ Vinyl oder β-Sulfatoethyl und M Wasserstoff, Natrium oder Kalium bedeuten.

Erfindungsgemäße rotfärbenden Farbstoffmischungen, die neben den Farbstoffen der allgemeinen Formeln (III) und (IV) auch Farbstoff der allgemeinen Formel (VIII) enthalten, enthalten den Farbstoff der allgemeinen Formel (III) bevorzugt in Mengen von 30 bis 60 Gew. %, den Farbstoff der allgemeinen Formel (IV) bevorzugt in Mengen von 10 bis 25 Gew. %, und den Farbstoff der allgemeinen Formel (VIII) bevorzugt in Mengen von 30 bis 45 Gew. %, jeweils bezogen auf den Gesamtfarbstoffgehalt.

Schließlich betrifft die vorliegende Erfindung auch eine gelbfärbende Farbstoffmischung enthaltend mindestens einen Farbstoff der allgemeinen Formel (V) 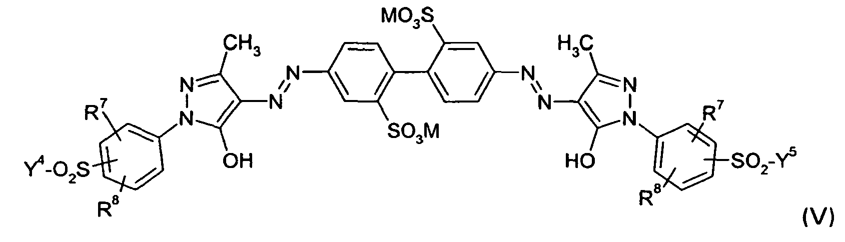 und mindestens einen Farbstoff der allgemeinen Formel (VI) 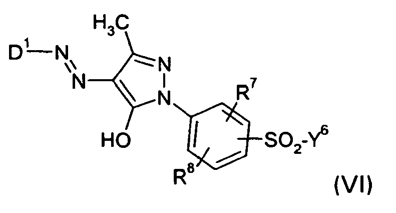 worin
R⁷ und R⁸ Wasserstoff, Methyl, Methoxy oder -SO₃M;
Y⁴, Y⁵ und Y⁶ unabhängig voneinander Vinyl oder β-Sulfatoethyl;
D¹ eine Gruppe der Formel 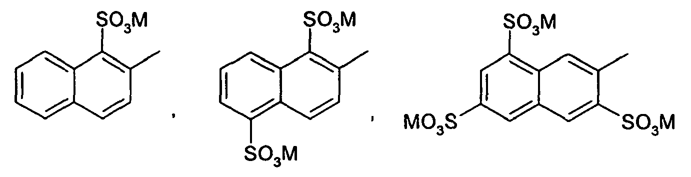 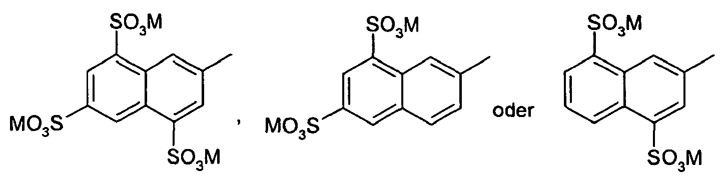 und
M Wasserstoff, Natrium oder Kalium
bedeuten.
Das Gewichtsverhältnis der Farbstoffe der allgemeinen Formel (V) und (VI) beträgt bevorzugt 1 : 9 bis 9 : 1, besonders bevorzugt 1 : 5,7 bis 4 : 1.

Bevorzugt enthält die erfindungsgemäße gelbfärbende Farbstoffmischung außerdem einen Farbstoff der allgemeinen Formel (IX) 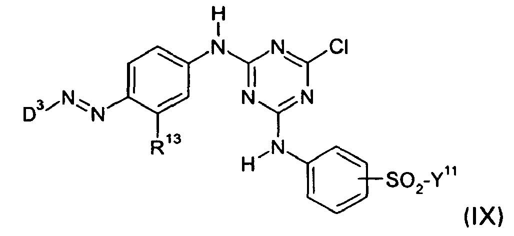 worin
R¹³ (C₂-C₄)-Alkanoylamino, Ureido, Sulfamoyl oder Acetyl;
Y¹¹ Vinyl oder β-Sulfatoethyl bedeutet; und
D³ eine der Bedeutungen von D' hat.

Eine besonders bevorzugte erfindungsgemäße gelbfärbende Farbstoffmischung enthält die Farbstoffe der allgemeinen Formeln (V) und (VI), wobei
R⁷ und R⁸ Wasserstoff bedeuten;
Y⁴, Y⁵ und Y⁶ Vinyl oder β-Sulfatoethyl bedeuten;
D' für eine Gruppe der Formel 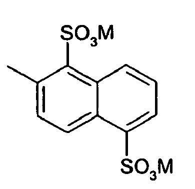 steht; und
M Wasserstoff, Natrium oder Kalium bedeutet.

Erfindungsgemäße gelbfärbenden Farbstoffmischungen, die neben den Farbstoffen der allgemeinen Formeln (V) und (VI) auch Farbstoff der allgemeinen Formel (IX) enthalten, enthalten den Farbstoff der allgemeinen Formel (V) bevorzugt in Mengen von 10 bis 30 Gew. %, den Farbstoff der allgemeinen Formel (VI) bevorzugt in Mengen von 20 bis 50 Gew. %, und den Farbstoff der allgemeinen Formel (IX) bevorzugt in Mengen von 20 bis 70 Gew. %, jeweils bezogen auf den Gesamtfarbstoffgehalt.

Die erfindungsgemäßen Farbstoffmischungen können als Präparation in fester oder in flüssiger (gelöster) Form vorliegen. In fester Form enthalten sie im allgemeinen die bei wasserlöslichen und insbesondere faserreaktiven Farbstoffen üblichen Elektrolytsalze, wie Natriumchlorid, Kaliumchlorid und Natriumsulfat, und können des weiteren die in Handelsfarbstoffen üblichen Hilfsmittel enthalten, wie Puffersubstanzen, die einen pH-Wert in wässriger Lösung zwischen 3 und 8 einzustellen vermögen, wie Natriumacetat, Natriumborat, Natriumhydrogencarbonat, Natriumdihydrogenphosphat und Dinatriumhydrogenphosphat, geringe Mengen an Sikkativen oder die Löslichkeit verbessernde Mittel, wie die bekannten Naphthalinsulfonsäure-Formaldehyd-Kondensationsprodukte, oder, falls sie in flüssiger, wässriger Lösung (einschließlich des Gehaltes von Verdickungsmitteln, wie sie bei Druckpasten üblich sind) vorliegen, Substanzen, die die Haltbarkeit dieser Präparationen gewährleisten, wie beispielsweise schimmelverhütende Mittel.

Im allgemeinen liegen die erfindungsgemäßen Farbstoffmischungen als elektrolytsalzhaltige Farbstoffpulver mit einem Gesamtfarbstoffgehalt von 20 bis 70 Gew.-%, bezogen auf das Farbstoffpulver bzw. die Präparation, vor. Diese Farbstoffpulver/Präparationen können zudem die erwähnten Puffersubstanzen in einer Gesamtmenge von bis zu 5 Gew.-%, bezogen auf das Farbstoffpulver, enthalten. Sofern die erfindungsgemäßen Farbstoffmischungen in wässriger Lösung vorliegen, beträgt der Gesamtfarbstoffgehalt in diesen wässrigen Lösungen bis zu etwa 50 Gew.-%, wie beispielsweise zwischen 5 und 40 Gew.-%., wobei der Elektrolytsalzgehalt in diesen wässrigen Lösungen bevorzugt unterhalb 10 Gew.-%, bezogen auf die wässrige Lösung, beträgt; die wässrigen Lösungen (Flüssigpräparationen) können die erwähnten Puffersubstanzen in der Regel in einer Menge von bis zu 5 Gew.-%, bevorzugt bis zu 2 Gew.-%, enthalten.

Die vorliegende Erfindung betrifft auch Verfahren zur Herstellung der erfindungsgemäßen Farbstoffmischungen.
Diese können beispielsweise dadurch erhalten werden, dass die Einzelfarbstoffe im gewünschten Verhältnis mechanisch gemischt werden. Die dazu erforderlichen Einzelfarbstoffe sind bekannt oder können nach bekannten Verfahren hergestellt werden.

Alternativ können die erfindungsgemäßen Farbstoffmischungen auch durch chemische Synthese hergestellt werden. Dies geschieht etwa durch Diazotieren einer Mischung von Diazokomponenten im gewünschten Verhältnis und anschließendes Kuppeln auf eine Kupplungskomponente. Zu der erhaltenen Reaktionslösung können gewünschtenfalls noch weitere Farbstoffe im gewünschten Verhältnis zugegeben werden. Die notwendigen Diazotierungs- und Kupplungsreaktionen sind bekannt und gehören zum Handwerkszeug des Fachmannes.

Beispielsweise kann eine erfindungsgemäße rotfärbende Farbstoffmischung dadurch hergestellt werden, dass eine Mischung aus einer Diazokomponente der allgemeinen Formel (X) 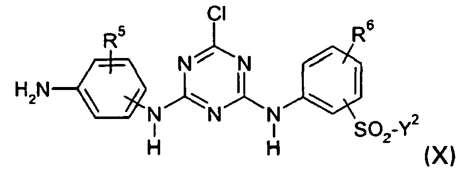 und einer Diazokomponente der allgemeinen Formel (XI) 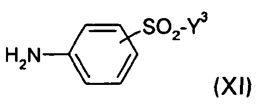 worin R⁵, R⁶, Y² und Y³ wie oben angegeben definiert sind,
gemeinsam diazotiert und auf die Kupplungskomponente der Formel (XII) 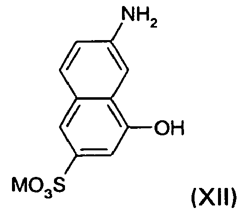 worin M wie oben angegeben definiert ist, gekuppelt wird.
Bei dieser Umsetzung erhält man eine erfindungsgemäße Farbstoffmischung aus den Farbstoffen der allgemeinen Formeln (III) und (IV). Soll diese Farbstoffmischung außerdem einen Farbstoff der allgemeinen Formel (VIII) enthalten, kann dieser der bei der Kupplungsreaktion erhaltenen Reaktionslösung im gewünschten Verhältnis zugegeben werden.

Eine erfindungsgemäße gelbfärbende Farbstoffmischung kann beispielsweise dadurch hergestellt werden, dass eine Mischung aus einer Diazokomponente der allgemeinen Formel (XIII) 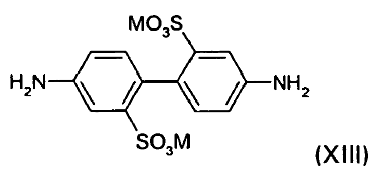 und einer Diazokomponente der allgemeinen Formel (XIV)

D¹-NH₂ (XIV)

worin M und D' wie oben angegeben definiert sind, gemeinsam diazotiert und auf die Kupplungskomponente der allgemeinen Formel (XV) 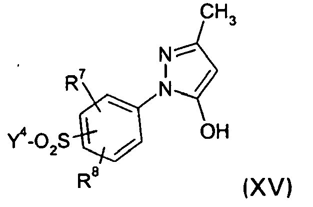 worin R⁷, R⁸ und Y⁴ wie oben angegeben definiert sind, gekuppelt wird.
Bei dieser Umsetzung erhält man eine erfindungsgemäße Farbstoffmischung aus den Farbstoffen der allgemeinen Formeln (V) und (VI). Soll diese Farbstoffmischung außerdem einen Farbstoff der allgemeinen Formel (IX) enthalten, kann dieser der bei der Kupplungsreaktion erhaltenen Reaktionslösung im gewünschten Verhältnis zugegeben werden.

Schließlich gelingt die Herstellung einer erfindungsgemäßen blaufärbenden Farbstoffmischung beispielsweise durch Umsetzung einer Verbindung der allgemeinen Formel (XVI) 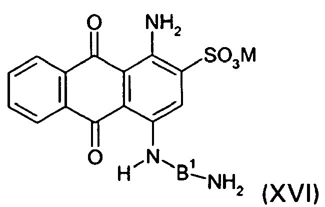 worin B' und M wie oben angegeben definiert sind, mit 1,3,5-Trichlortriazin nach in der Literatur beschriebenen und dem Fachmann bekannten Verfahren zu einer Verbindung der allgemeinen Formel (XVII) 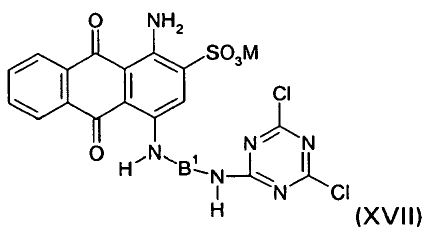 und weitere Umsetzung nach in der Literatur beschriebenen und dem Fachmann bekannten Verfahren mit einer Mischung im gewünschten Mischungsverhältnis aus den Verbindungen der allgemeinen Formeln (XVIII) und (XIX)

H-V¹ (XVIII)

H-V² (XIX)

worin V¹ und V² wie oben angegeben definiert sind.
Bei dieser Umsetzung erhält man eine erfindungsgemäße Farbstoffmischung aus den Farbstoffen der allgemeinen Formeln (I) und (II). Soll diese Farbstoffmischung außerdem einen Farbstoff der allgemeinen Formel (VII) enthalten, kann dieser der bei der Umsetzung mit den Verbindungen der allgemeinen Formeln (XVIII) und (XIX) erhaltenen Reaktionslösung im gewünschten Verhältnis zugegeben werden.

Die zur Herstellung erfindungsgemäßer Farbstoffmischungen notwendigen Verbindungen der allgemeinen Formeln (X) bis (XIX) sind bekannt oder können nach bekannten Verfahren hergestellt werden.

Die nachstehenden Beispiele dienen zur Erläuterung der Erfindung. Die Teile sind Gewichtsteile, die Prozentangaben stellen Gewichtsprozente dar, sofern nicht anders vermerkt. Gewichtsteile beziehen sich zu Volumenteilen wie Kilogramm zu Liter. Die in den Beispielen formelmäßig beschriebenen Verbindungen sind in Form der Natriumsalze geschrieben, da sie im allgemeinen in Form ihrer Salze, vorzugsweise Natrium- oder Kaliumsalze, hergestellt, isoliert und zum Färben verwendet werden. Die in den nachfolgenden Beispiele, insbesondere Tabellenbeispielen, genannten Ausgangsverbindungen können in Form der freien Säure oder ebenso in Form ihrer Salze, vorzugsweise Alkalimetallsalze, wie Natrium- oder Kaliumsalze, in die Synthese eingesetzt werden.

### Herstellungsbeispiel 1

Eine Lösung von 281,3 Teilen 4-(β -Sulfatoethylsulfonyl)anilin in 800 Teilen Wasser mit einem pH-Wert von 4 - 4,5 wird innerhalb von 30 min zu einer Suspension von 188 Teilen Cyanurchlorid in 1000 Teilen Wasser und 1000 Teilen Eis gegeben. Die Acylierung wird bei einer Temperatur von 10 - 13°C und einem pH-Wert von 4,1 - 4,2 durchgeführt. Nach beendeter Reaktion werden 188,2 Teile 2,4 Diamino-anilinsulfonsäure zugegeben.

Die weitere Acylierung wird bei einer Temperatur von 20°C und einem pH-Wert von 6,2 - 6,3 durchgeführt. Nach beendeter Reaktion werden 140,6 Teile 4-(β-Sulfatoethylsulfonyl)anilin eingestreut.

Die Reaktionsmischung wird bei 12°C und einem pH-Wert von 0,8 - 0,9 durch Zugabe von 268 Teilen 40 %iger wässriger Natriumnitritlösung diazotiert. Nach beendeter Reaktion werden in die Reaktionsmischung 351,7 Teile 7-Amino-1-naphthol-3-sulfonsäure eingestreut. Die Kupplung wird bei einem pH von 3,5 und 20°C durchgeführt. Nach beendeter Reaktion wird der pH-Wert auf 6,0 gestellt. Durch Eindampfen dieser Farbstofflösung erhält man eine Farbstoffmischung, die auf Wolle und Polyamid rote Färbungen und Drucke liefert.

Die Farbstoffmischung enthält 897,0 Teile eines Farbstoffs der Formel (IIIa) 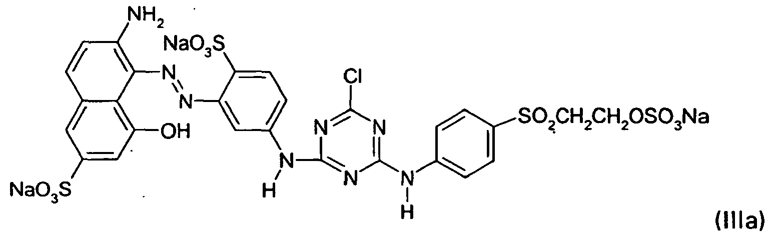 und 288 Teile eines Farbstoffs der Formel (IVa)

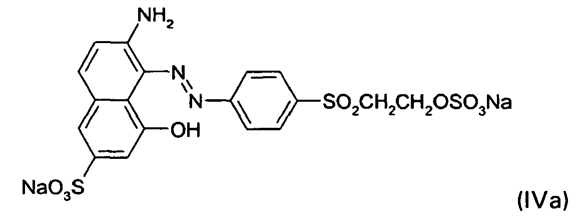

Alternativ kann die erhaltene Farbstofflösung auch durch Zusatz eines PhosphatPuffers bei pH 5,5 - 6 gepuffert und durch weitere Verdünnung bzw. Konzentration als Flüssigmarke bestimmter Stärke eingestellt werden.

### Herstellungsbeispiel 2

Eine Lösung von 281,3 Teilen 4-(β -Sulfatoethylsulfonyl)anilin in 800 Teilen Wasser und einem pH-Wert von 4 - 4,5 wird innerhalb von 30 min zu einer Suspension von 188 Teilen Cyanurchlorid in 1000 Teilen Wasser und 1000 Teilen Eis gegeben. Die Acylierung wird bei einer Temperatur von 10 - 13°C und einem pH-Wert von 4,1 - 4,2 durchgeführt. Nach beendeter Reaktion werden 188,2 Teile 2,4-Diamino-anilinsulfonsäure zugegeben.

Die weitere Acylierung wird bei einer Temperatur von 20°C und einem pH-Wert von 6,2 - 6,3 durchgeführt. Nach beendeter Reaktion werden 140,6 Teile 4-(β-Sulfatoethylsulfonyl)anilin und eine 92 g 4-Vinylsulfonylanilin enthaltende wässrige Lösung zugegeben.

Die Reaktionsmischung wird bei 12°C und einem pH-Wert von 0,8 - 0,9 durch Zugabe von 357 Teilen 40 %iger wässriger Natriumnitritlösung wie üblich diazotiert. Nach beendeter Reaktion werden in die Reaktionsmischung 478 Teile 7-Amino-1-naphthol-3-sulfonsäure eingestreut. Die Kupplung wird bei einem pH von 3,5 und 20°C durchgeführt. Nach beendeter Reaktion wird der pH-Wert auf 6,0 gestellt.
Durch Eindampfen dieser Farbstofflösung erhält man eine Farbstoffmischung, die auf Wolle und Polyamid rote Färbungen und Drucke liefert.
Die Farbstoffmischung enthält 897 Teile des Farbstoffs der Formel (IIIa), 288 Teile des Farbstoffs der Formel (IVa) und 239 Teile des Farbstoffs der Formel (IVb)

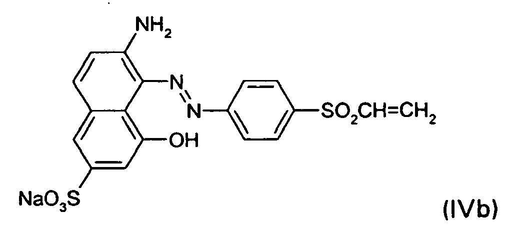

### Herstellungsbeispiel 3

In der gemäß Herstellungsbeispiel 1 erhaltenen Reaktionslösung werden 987 Teile eines elektrolythaltigen Farbstoffpulvers, das den roten Azofarbstoff der Formel (VIIIa) 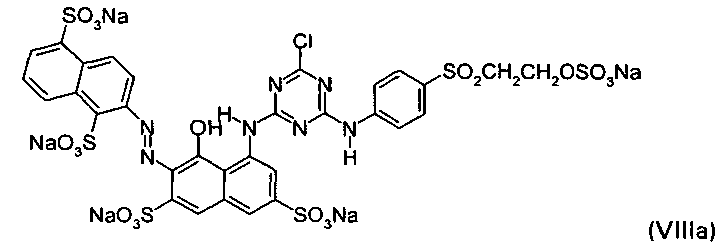 in 50 %igem Anteil enthält, gelöst.
Die erhaltene Farbstofflösung wird auf pH 5,5 - 6,5 eingestellt. Durch Eindampfen dieser Farbstofflösung erhält man eine Farbstoffmischung, die auf Wolle und Polyamid rote Färbungen und Drucke liefert.

### Herstellungsbeispiel 4

52 Teile eines elektrolythaltigen Farbstoffpulvers, das den roten Azofarbstoff der Formel (IIIa) in 70 %igem Anteil enthält und 13 Teile eines elektrolythaltigen Farbstoffspulvers, das den roten Azofarbstoff der Formel (IVa) in 70 %igem Anteil enthält und 35 Teile eines elektrolythaltigen Farbstoffpulvers, das den roten Azofarbstoff der Formel (IVb) in 70 %igem Anteil enthält, werden mechanisch miteinander gemischt. Die resultierende, erfindungsgemäße Farbstoffmischung liefert auf Wolle und Polyamid rote Färbungen und Drucke.

### Herstellungsbeispiel 5

128 Teile eines elektrolythaltigen Farbstoffpulvers, das den roten Azofarbstoff der Formel (IIIb) 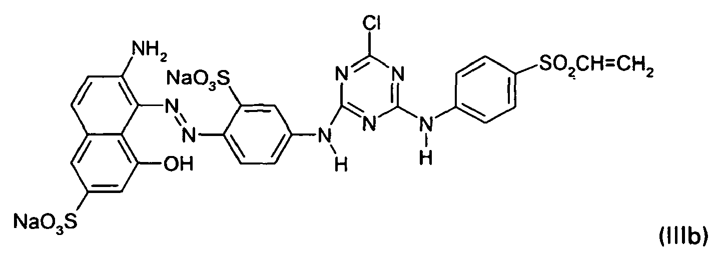 in 70 %igem Anteil enthält, 41 Teile eines elektrolythaltigen Farbstoffpulvers, das den roten Azofarbstoff der Formel (IVa) in 70 %igem Anteil enthält, werden mechanisch miteinander gemischt. Die resultierende, erfindungsgemäße Farbstoffmischung liefert auf Wolle und Polyamid rote Färbungen und Drucke.

### Herstellungsbeispiel 6

Eine Lösung von 229 Teilen Benzidin-2,2'-disulfonsäure und 202 Teilen 2-Naphthylamin-1,5-disulfonsäure in 2800 Teilen Wasser mit einem pH-Wert von ca. 5,5 wird mit 345 Teilen einer 40 %igen Natriumnitritlösung versetzt. Diese erhaltene Lösung tropft man zu einer Mischung aus 2000 Teilen Eis und 580 Teilen einer 31 %igen Salzsäure. Nach beendeter Reaktion wird der Natriumnitritüberschuss entfernt. Zur Diazotierungsmischung werden 724 Teile 1-(4-[β-Sulfatoethylsulfonyl]-phenyl)-5-hydroxy-3-methyl-1H-pyrazol gegeben.
Die Kupplung wird durch Zugabe von 15 %iger Sodalösung bei einem pH-Wert von 4,0 und einer Temperatur von 40 - 45°C zu Ende geführt.
Durch Eindampfen dieser Farbstofflösung erhält man eine Farbstoffmischung, die 784 Teile eines Farbstoffs der Formel (Va) 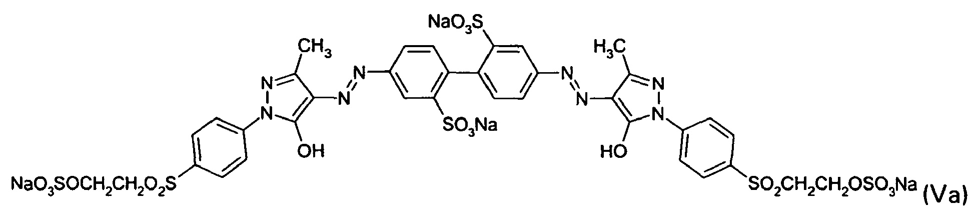 und 446 Teile eines Farbstoffs der Formel (VIa) enthält

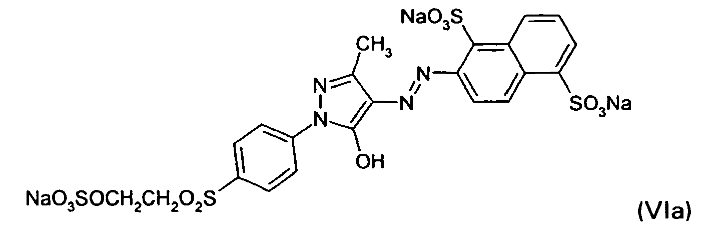

Die erhaltene Farbstoffmischung färbt Wolle und Polyamid in gelben Tönen.

### Herstellungsbeispiel 7

In die in Herstellungsbeispiel 6 vor dem Eindampfen erhaltene Reaktionsmischung werden 2900 Teile eines elektrolythatligen Farbstoffpulvers, das den gelben Azofarbstoff der Formel (IXa) 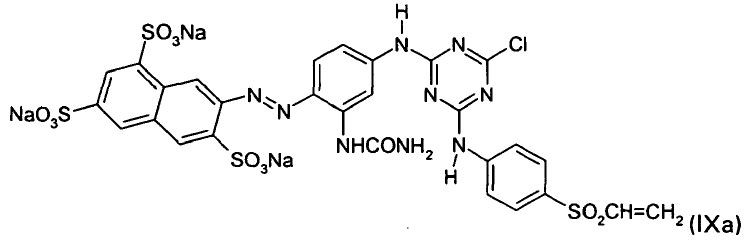 in 60 %igem Anteil enthält, gelöst.
Nach Einstellen des pH-Wertes auf 6,0 und Eindampfen erhält man eine Farbstoffmischung, die auf Wolle und Polyamid gelbe Färbungen und Drucke liefert.

### Herstellungsbeispiel 8

57 Teile eines elektrolythaltigen Farbstoffpulvers, das den gelben Azofarbstoff der Formel (IXa) in 60 %igem Anteil enthält, 14 Teile eines elektrolythaltigen Farbstoffpulvers, das den gelben Azofarbstoff der Formel (Va) in 60 %igem Anteil enthält und 29 Teile eines elektrolythaltigen Farbstoffpulvers, das den gelben Azofarbstoff der Formel (VIa) in 50 %igem Anteil enthält, werden mechanisch gemischt.
Die resultierende erfindungsgemäße Farbstoffmischung liefert auf Wolle und Polyamid gelbe Färbungen und Drucke.

### Herstellungsbeispiel 9

57 Teile eines elektrolythaltigen Farbstoffpulvers, das den gelben Azofarbstoff der Formel (IXb) 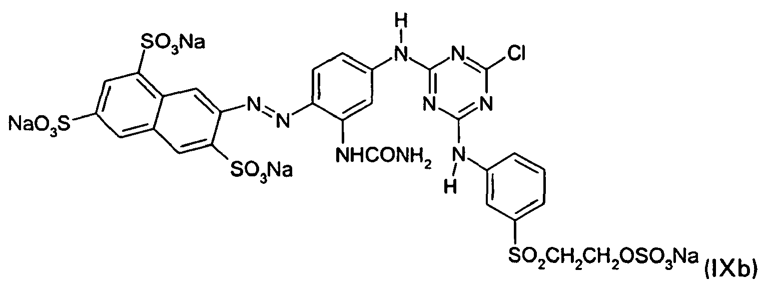 in 50 %igem Anteil enthält, 14 Teile eines elektrolythaltigen Farbstoffpulvers, das den gelben Azofarbstoff der Formel (Va) in 60 %igem Anteil enthält und 29 Teile eines elektrolythaltigen Farbstoffpulvers, das den gelben Azofarbstoff der Formel (Vlb) 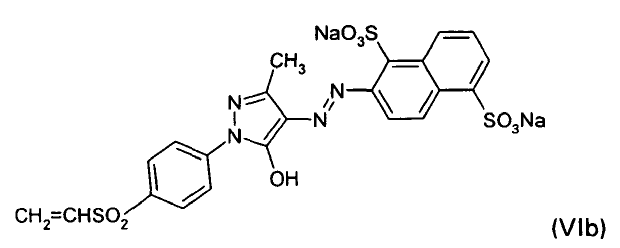 in 70 %igem Anteil enthält, werden mechanisch gemischt. Die resultierende erfindungsgemäße Farbstoffmischung liefert auf Wolle und Polyamid gelbe Färbungen und Drucke.

### Herstellungsbeispiel 10

75 Teile eines elektrolythaltigen Farbstoffpulvers, das den gelben Azofarbstoff der Formel (IXc) 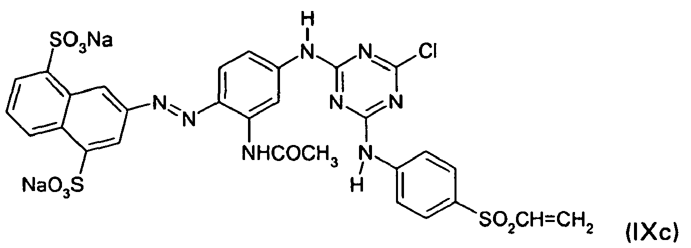 in 50 %igem Anteil enthält, 10 Teile eines elektrolythaltigen Farbstoffpulvers, das den gelben Azofarbstoff der Formel (Va) in 60 %igem Anteil enthält und 20 Teile eines elektrolythaltigen Farbstoffpulvers, das den gelben Azofarbstoff der Formel (VIa) in 50 %igem Anteil enthält, werden mechanisch gemischt.
Die resultierende erfindungsgemäße Farbstofflösung liefert auf Wolle und Polyamid gelbe Färbungen und Drucke.

### Herstellungsbeispiel 11

159,3 Teile 1-Amino-4-(2',4',6'-trimethyl-3'-amino-5'-sulfophenyl-1-)aminoanthrachinon-2-sulfonsäure werden in 550 Teilen Wasser mit 20 %iger Natronlauge bei einem pH-Wert von 6,5 - 7,0 gelöst. Die Lösung wird innerhalb von 30 min zu einer Suspension von 58,7 Teilen Cyanurchlorid, 225 Teilen Eis und 0,4 Teilen Leophen (Dispergiermittel) in 225 Teilen Wasser gegeben. Die Acylierung wird bei einer Temperatur von 0 - 5°C und einem pH-Wert von 6,5 - 7,0 durchgeführt. Nach beendeter Reaktion werden 59 Teile 4-(β-Sulfatoethylsulfonyl)anilin und 17,2 Teile Anilin-3-sulfonsäure zugegeben. Die weitere Acylierung wird bei einem pH-Wert von 5,5 - 6,0 und einer Temperatur von 60 - 65°C durchgeführt. Nach Beendigung der Reaktion erhält man durch Eindampfen dieser Farbstofflösung eine Farbstoffmischung, die 79,7 Teile eines Farbstoffs der Formel (IIa) 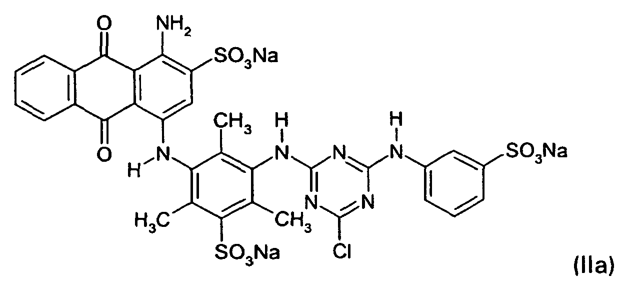 und 208,0 Teile eines Farbstoffs der Formel (la) 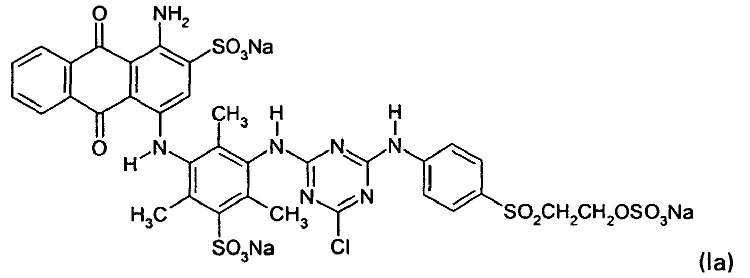 enthält.
Die Farbstoffmischung liefert auf Wolle und Polyamid blaue Färbungen und Drucke.
Alternativ kann die erhaltene Farbstofflösung durch weitere Verdünnung bzw. Konzentration als Flüssigmarke bestimmter Stärke eingestellt werden.

### Beispiel 12

In der in Beispiel 11 erhaltenen Reaktionslösung werden 41 Teile eines elektrolythaltigen Farbstoffpulvers, das den blauen Azofarbstoff der Formel (Vlla) 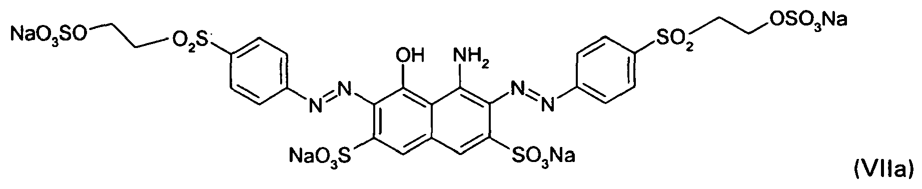 in 70 %igem Anteil enthält, gelöst. Durch Eindampfen der Farbstofflösung erhält man eine Farbstoffmischung, die auf Wolle und Polyamid blaue Färbungen und Drucke liefert.

### Beispiel 13

70 Teile eines elektrolythaltigen Farbstoffpulvers, das den blauen Farbstoff der Formel (Ib) 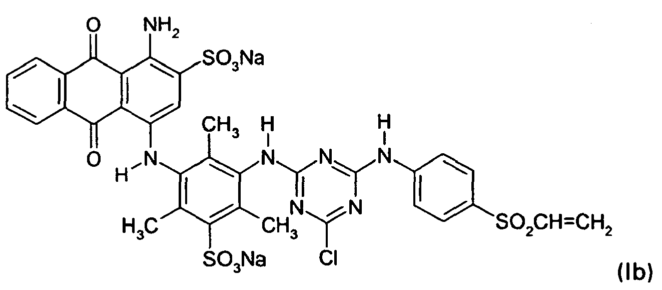 in 60 %igem Anteil enthält, 20 Teile eines elektrolythaltigen Farbstoffpulvers, das den blauen Farbstoff der Formel (IIa) in 65 %igem Anteil enthält und 10 Teile eines elektrolythaltigen Farbstoffpulvers, das den blauen Azofarbstoff der Formel (VIIa) in 60 %igem Anteil enthält, werden mechanisch gemischt.
Die resultierende erfindungsgemäße Farbstoffmischung liefert auf Wolle und Polyamid blaue Färbungen und Drucke.

### Färbebeispiel 1

Es werden 1 Teil der Farbstoffmischung gemäß Herstellungsbeispiel 1 in 2000 Teilen Wasser gelöst und 5 Teile Natriumsulfat, 1 Teil eines Egalisierhilfsmittels (basierend auf einem Kondensationsprodukt aus einem höheren aliphatischen Amin und Ethylenoxid) sowie 5 Teile Natriumacetat zugegeben.
Dann wird der pH mit Essigsäure (80 %) auf einen Wert von 4,5 gestellt. Das Färbebad wird 10 min auf 50°C erwärmt und es werden dann 100 Teile eines Wollgewebes zugegeben. Man erwärmt innerhalb von 50 min auf eine Temperatur von 100°C und färbt 60 min bei dieser Temperatur. Danach lässt man auf 90°C abkühlen und entnimmt das Färbegut. Das Wollgewebe wird mit warmem und kaltem Wasser gewaschen, anschließend geschleudert und getrocknet.
Es wird eine rote Färbung mit guten Licht- und Nassechtheiten, sowie guter Faseregalität erhalten.

### Färbebeispiel 2

Es werden 1 Teil der Farbstoffmischung gemäß Herstellungsbeispiel 1 in 2000 Teilen Wasser gelöst und 1 teil eines Egalisierhilfsmittels (basierend auf einem Kondensationsprodukt aus einem höheren aliphatischen Amin und Ehtylenoxid) sowie 5 teile Natriumacetat zugegeben. Dann wird der pH mit Essigsäure (80%) auf einen Wert von 5 gestellt. Das Färbebad wird 10 Minuten auf 50°C erwärmt und es werden dann 100 Teile eines PA-Gewebes zugegeben. Man erwärmt innerhalb von 50 Minuten auf eine Temperatur von 110°C und färbt 60 Minuten bei dieser Temperatur. Danach lässt man auf 60°C abkühlen und entnimmt das Färbegut. Das PA-Gewebe wird mit warmem und kaltem Wasser gewaschen, geseift und anschließend geschleudert und getrocknet.
Es wird eine rote Färbung mit guten Licht- und Nassechtheiten, sowie guter Faseregalität erhalten.

Entsprechend den Färbebeispielen 1 und 2 werden auch alle Farbstoffe gemäß der Herstellungsbeispiele 2 - 13 gefärbt.

Weitere Färbebeispiele (gemäß Färbebeispiele 1 oder 2) zur Erzielung verschiedener Farbtöne können den folgenden Tabellenbeispielen entnommen werden.

| Färbebeispiel | Teile | Farbstoffmischung aus Beispiel | Ton |
|---|---|---|---|
| 3 | 0,28 0,8 0,46 | 2 6 12 | dunkelbraun |
| 4 | 0,45 0,4 | 3 7 | orange |
| 5 | 0,4 0,5 | 3 12 | violett |
| 6 | 0,6 0,6 | 7 12 | grün |
| 7 | 0,45 0,4 0,7 | 3 12 7 | braun |

## Patentansprüche

1. Verfahren zum Mono-, Di- oder Trichromie-Färben und -Bedrucken von natürlichen und synthetischen Polyamidfasermaterialien, **dadurch gekennzeichnet, dass** man
a) eine blaufärbende Farbstoffmischung enthaltend mindestens einen Farbstoff der allgemeinen Formel (I) 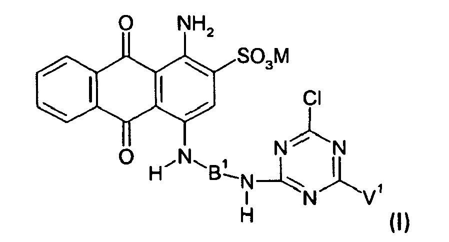 und mindestens einen Farbstoff der allgemeinen Formel (II) 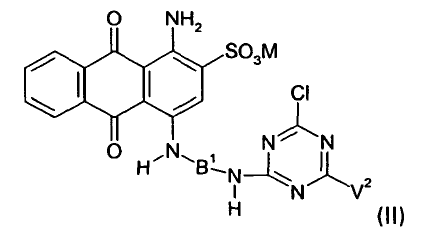 worin
B¹ für eine Gruppe der Formel
-CH₃-CH₂-CH₂- , -CH₂-C(CH₃)₂-CH₂- 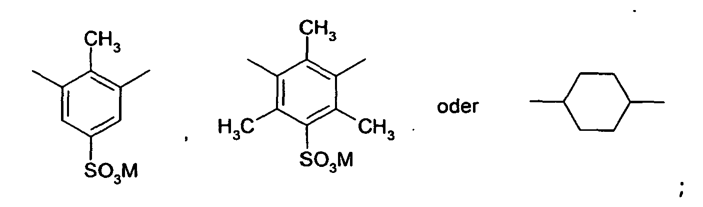
V¹ für eine Gruppe der Formel 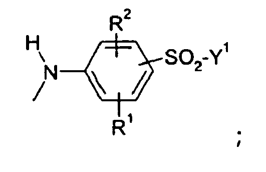
V² für eine Gruppe der Formel 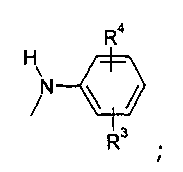
R¹, R² und R³ unabhängig voneinander für Wasserstoff, Methyl, Methoxy oder Chlor;
R⁴ für Wasserstoff oder -SO₃M;
Y¹ für Vinyl oder β-Sulfatoethyl; und
M für Wasserstoff, Natrium oder Kalium
steht; und/oder
b) eine rotfärbende Farbstoffmischung enthaltend mindestens einen Farbstoff der allgemeinen Formel (III) 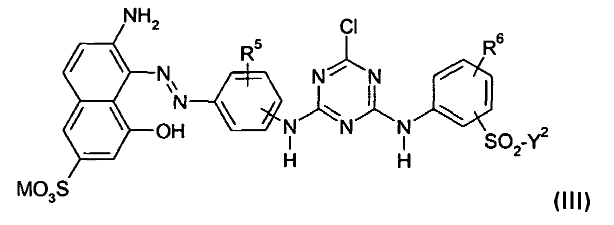 und mindestens einen Farbstoff der allgemeinen Formel (IV) 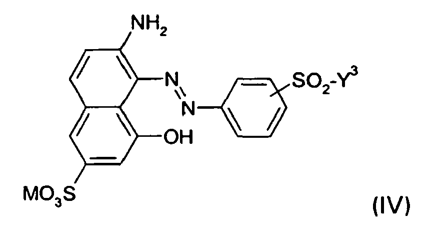 worin
R⁵ Wasserstoff, -SO₃M, -COOM, Methyl, oder Chlor;
R⁶ Wasserstoff, Methyl oder Methoxy;
Y₂ und Y₃ unabhängig voneinander Vinyl oder β-Sulfatoethyl; und
M Wasserstoff, Natrium oder Kalium
bedeuten; und/oder
c) eine gelbfärbende Farbstoffmischung enthaltend mindestens einen Farbstoff der allgemeinen Formel (V) 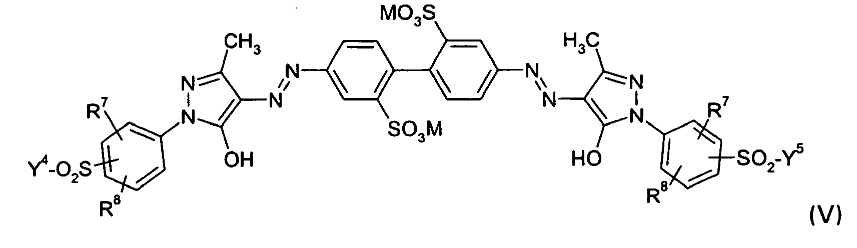 und mindestens einen Farbstoff der allgemeinen Formel (VI) 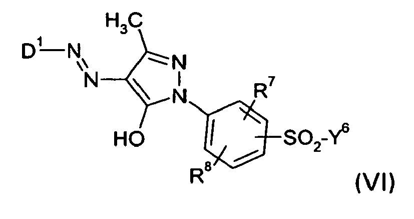 worin
R⁷ und R⁸ Wasserstoff, Methyl, Methoxy oder -SO₃M;
Y⁴, Y⁵ und Y⁶ unabhängig voneinander Vinyl oder β-Sulfatoethyl;
D¹ eine Gruppe der Formel 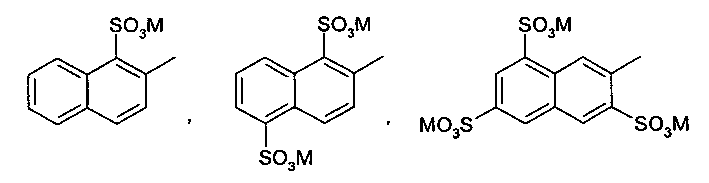 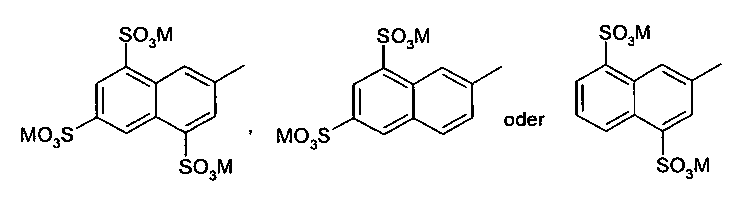 und
M Wasserstoff, Natrium oder Kalium
bedeuten,
einsetzt.

2. Verfahren nach Anspruch 1, **dadurch gekennzeichnet, dass** die blaufärbende Farbstoffmischung a) neben den Farbstoffen der allgemeinen Formeln (I) und (II) zusätzlich einen Farbstoff der allgemeinen Formel (VII) 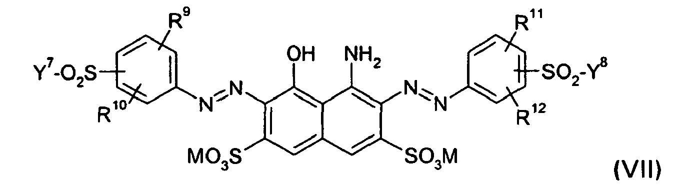 enthält, worin
R⁹, R¹⁰, R¹¹ und R¹² unabhängig voneinander Wasserstoff, Methyl, Methoxy oder Chlor;
Y⁷ und Y⁸ unabhängig voneinander Vinyl oder β-Sulfatoethyl; und
M Wasserstoff, Natrium oder Kalium
bedeuten.

3. Verfahren nach Anspruch 1 und/oder 2, **dadurch gekennzeichnet, dass** die rotfärbende Farbstoffmischung b) neben den Farbstoffen der allgemeinen Formeln (III) und (IV) zusätzlich einen Farbstoff der allgemeinen Formel (VIII) 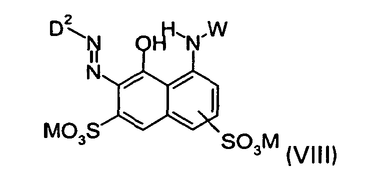 worin
W für eine Gruppe der Formel 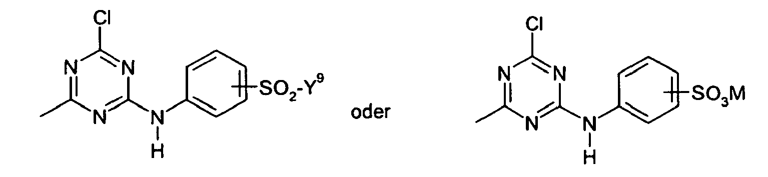 steht und falls D² einen faserreaktiven Rest enthält auch eine Gruppe der Formel 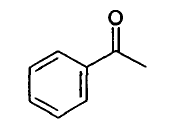 sein kann
y⁹ Vinyl oder β-Sulfatoethyl bedeutet;
D² für eine Gruppe der Formel 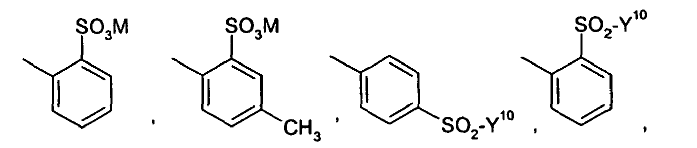 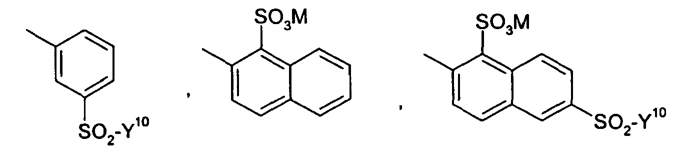 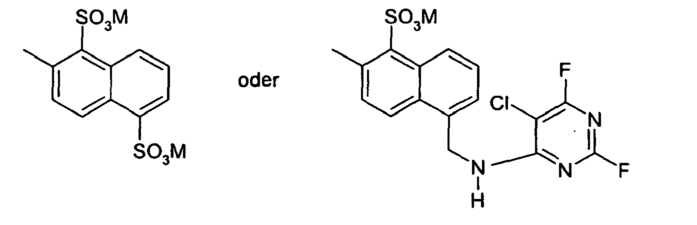 steht; und
M Wasserstoff, Natrium oder Kalium bedeutet.

4. Verfahren nach einem oder mehreren der Ansprüche 1 bis 3, **dadurch gekennzeichnet, dass** die gelbfärbende Farbstoffmischung c) neben den Farbstoffen der allgemeinen Formeln (V) und (VI) zusätzlich einen Farbstoff der allgemeinen Formel (IX) 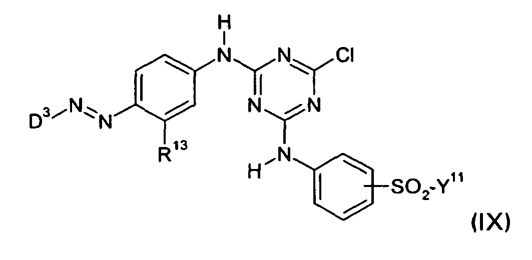 enthält, worin
R¹³ (C₂-C₄)-Alkanoylamino, Ureido, Sulfamoyl oder Acetyl;
Y¹¹ Vinyl oder β-Sulfatoethyl bedeutet; und
D³ eine der Bedeutungen von D¹ hat.

5. Blaufärbende Farbstoffmischung enthaltend mindestens einen Farbstoff der allgemeinen Formel (I) 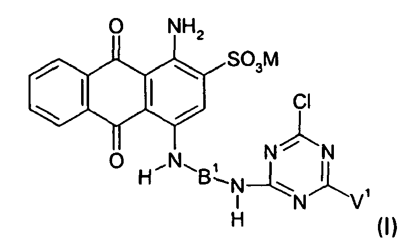 und mindestens einen Farbstoff der allgemeinen Formel (II) 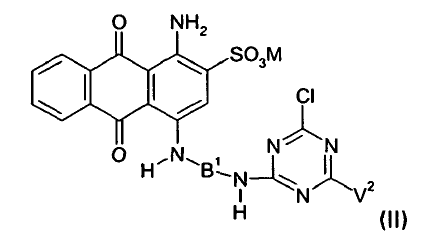 worin
B¹ für eine Gruppe der Formel
-CH₂-CH₂-CH₂- , -CH₂C(CH₃)₂-CH₂- 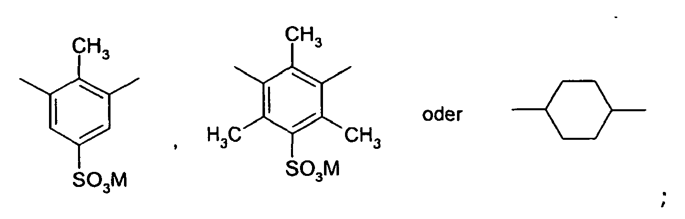
V¹ für eine Gruppe der Formel 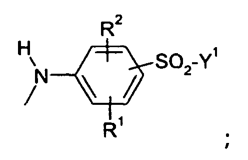
V² für eine Gruppe der Formel 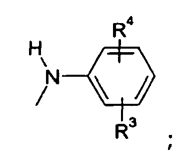
R¹, R² und R³ unabhängig voneinander für Wasserstoff, Methyl, Methoxy oder Chlor;
R⁴ für Wasserstoff oder -SO₃M;
Y¹ für Vinyl oder β-Sulfatoethyl; und
M für Wasserstoff, Natrium oder Kalium
steht.

6. Farbstoffmischung nach Anspruch 5, **dadurch gekennzeichnet, dass** sie einen Farbstoff der allgemeinen Formel (VII) 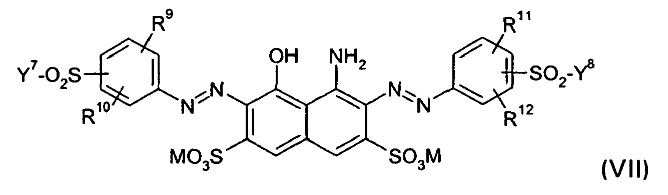 enthält, worin
R⁹, R¹⁰, R¹¹ und R¹² unabhängig voneinander Wasserstoff, Methyl, Methoxy oder Chlor;
Y⁷ und Y⁸ unabhängig voneinander Vinyl oder β-Sulfatoethyl; und
M Wasserstoff, Natrium oder Kalium
bedeuten.

7. Farbstoffmischung nach Anspruch 5 und/oder 6, **dadurch gekennzeichnet, dass** sie die Farbstoffe der allgemeinen Formeln (I), (II) und (VII) enthält, wobei die Reste R¹, R², R³, R⁹, R'°, R¹¹ und R¹² Wasserstoff bedeuten, R⁴ für -SO₃M steht und B¹ eine Gruppe der Formel 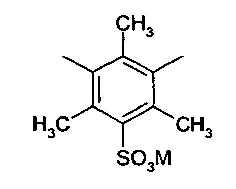 bedeutet.

8. Rotfärbende Farbstoffmischung enthaltend mindestens einen Farbstoff der allgemeinen Formel (III) 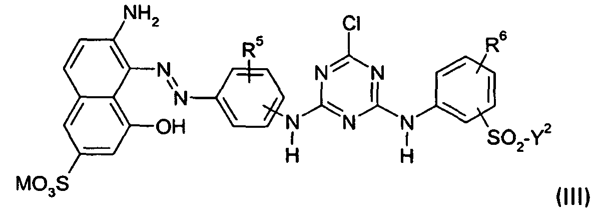 und mindestens einen Farbstoff der allgemeinen Formel (IV) 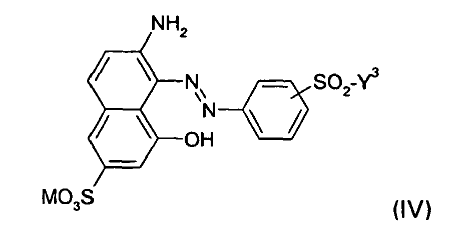 worin
R⁵ Wasserstoff, -SO₃M, -COOM, Methyl, oder Chlor;
R⁶ Wasserstoff, Methyl oder Methoxy;
Y₂ und Y₃ unabhängig voneinander Vinyl oder β-Sulfatoethyl; und
M Wasserstoff, Natrium oder Kalium
bedeuten.

9. Farbstoffmischung nach Anspruch 8, **dadurch gekennzeichnet, dass** sie einen Farbstoff der allgemeinen Formel (VIII) 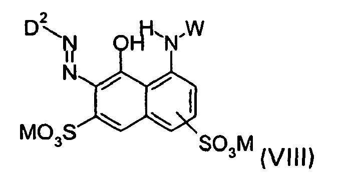 worin
W für eine Gruppe der Formel 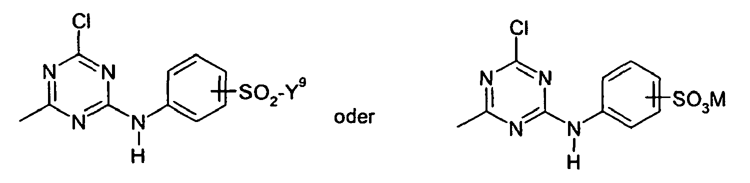 steht und falls D² einen faserreaktiven Rest enthält auch eine Gruppe der Formel 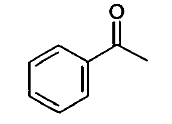 sein kann
Y⁹ Vinyl oder β-Sulfatoethyl bedeutet;
D² für eine Gruppe der Formel 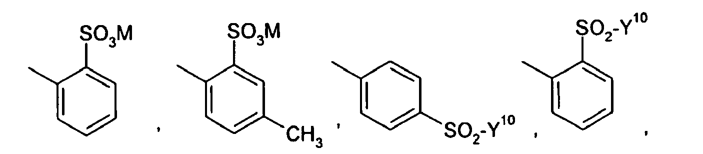 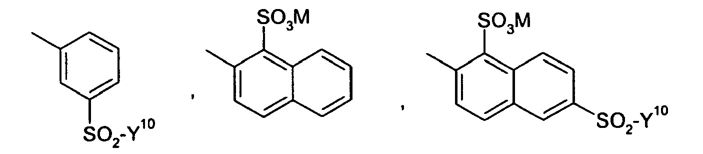 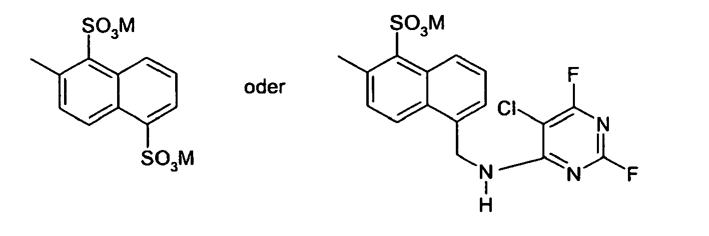 steht; und
M Wasserstoff, Natrium oder Kalium bedeutet.

10. Farbstoffmischung nach Anspruch 8 und/oder 9, **dadurch gekennzeichnet, dass** sie die Farbstoffe der allgemeinen Formeln (III), (IV) und (VIII) enthält, wobei R⁵ -SO₃M und R⁶ Wasserstoff bedeuten,
W für eine Gruppe der Formel 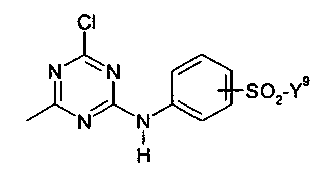
und D² für eine Gruppe der Formel 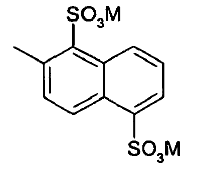 steht, wobei Y⁹ Vinyl oder β-Sulfatoethyl und M Wasserstoff, Natrium oder Kalium bedeuten.

11. Gelbfärbende Farbstoffmischung enthaltend mindestens einen Farbstoff der allgemeinen Formel (V) 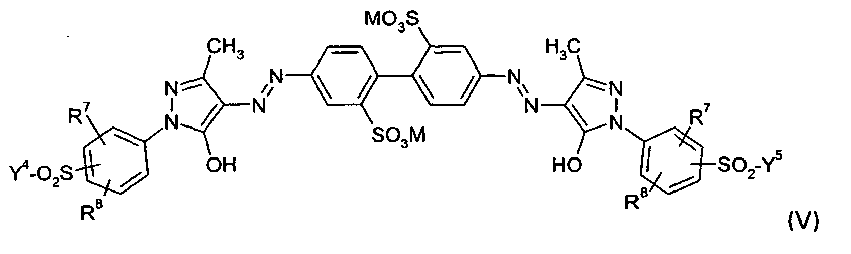 und mindestens einen Farbstoff der allgemeinen Formel (VI) 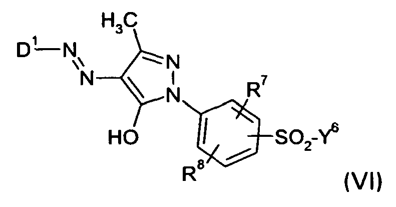 worin
R⁷ und R⁸ Wasserstoff, Methyl, Methoxy oder -SO₃M;
Y⁴, Y⁵ und Y⁶ unabhängig voneinander Vinyl oder β-Sulfatoethyl;
D¹ eine Gruppe der Formel 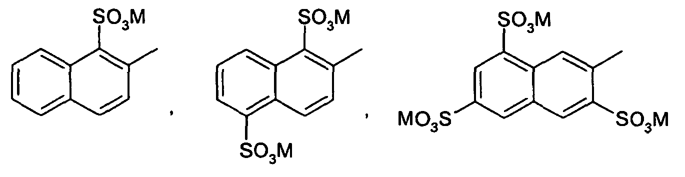 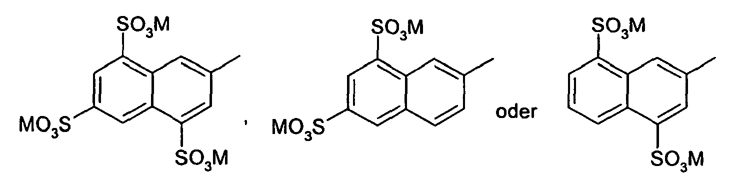 und
M Wasserstoff, Natrium oder Kalium
bedeuten.

12. Farbstoffmischung nach Anspruch 11, **dadurch gekennzeichnet, dass** sie einen Farbstoff der allgemeinen Formel (IX) 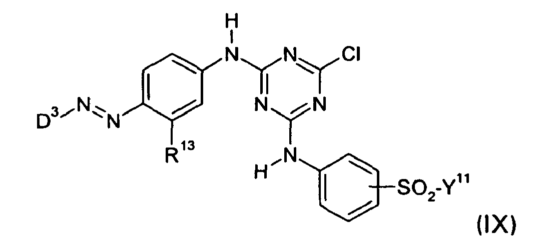 enthält, worin
R¹³ (C₂-C₄)-Alkanoylamino, Ureido, Sulfamoyl oder Acetyl;
Y¹¹ Vinyl oder β-Sulfatoethyl bedeutet; und
D³ eine der Bedeutungen von D¹ hat.

13. Farbstoffmischung nach Anspruch 11 und/oder 12, **dadurch gekennzeichnet, dass** sie die Farbstoffe der allgemeinen Formeln (V) und (VI) enthält, wobei
R⁷ und R⁸ Wasserstoff bedeuten;
Y⁴, Y⁵ und Y⁶ Vinyl oder β-Sulfatoethyl bedeuten;
D¹ für eine Gruppe der Formel 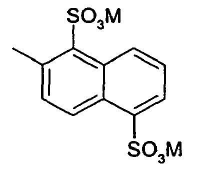 steht; und
M Wasserstoff, Natrium oder Kalium bedeutet.

14. Verfahren zur Herstellung einer Farbstoffmischung nach einem oder mehreren der Ansprüche 5 bis 13, **dadurch gekennzeichnet, dass** die Einzelfarbstoffe im gewünschten Verhältnis mechanisch gemischt werden.

15. Verfahren zur Herstellung einer blaufärbenden Farbstoffmischung nach einem der Ansprüche 5 bis 7, **dadurch gekennzeichnet, dass** eine Verbindung der allgemeinen Formel (XVI) 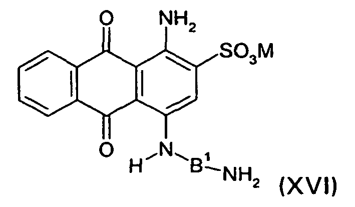 worin B¹ und M wie in Anspruch 5 angegeben definiert sind, mit 1,3,5-Trichlortriazin zu einer Verbindung der allgemeinen Formel (XVII) 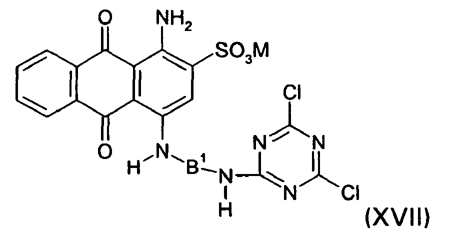 und weiter mit einer Mischung im gewünschten Mischungsverhältnis aus den Verbindungen der allgemeinen Formeln (XVIII) und (XIX)
H-V¹ (XVIII)
H-V² (XIX)
worin V¹ und V² wie in Anspruch 5 angegeben definiert sind, umgesetzt wird und der Reaktionslösung gegebenenfalls weitere Farbstoffe der allgemeinen Formeln (I), (II) und (VII) im gewünschten Verhältnis zugegeben werden.

16. Verfahren zur Herstellung einer rotfärbenden Farbstoffmischung nach einem der Ansprüche 8 bis 10, **dadurch gekennzeichnet, dass** eine Mischung aus einer Diazokomponente der allgemeinen Formel (X) 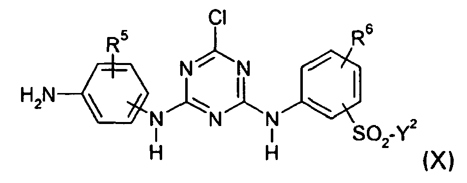 und einer Diazokomponente der allgemeinen Formel (XI) 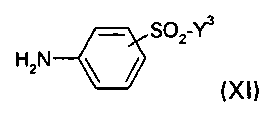 worin R⁵, R⁶, Y² und Y³ wie in Anspruch 8 angegeben definiert sind, gemeinsam diazotiert und auf die Kupplungskomponente der Formel (XII) 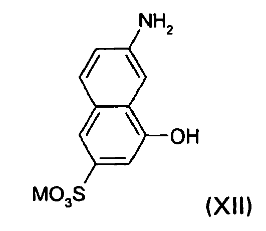 worin M wie in Anspruch 8 angegeben definiert ist, gekuppelt wird und der Reaktionslösung gegebenenfalls weitere Farbstoffe der allgemeinen Formeln (III), (IV) und (VIII) im gewünschten Verhältnis zugegeben werden.

17. Verfahren zur Herstellung einer gelbfärbende Farbstoffmischung nach einem der Ansprüche 11 bis 13, **dadurch gekennzeichnet, dass** eine Mischung aus einer Diazokomponente der allgemeinen Formel (XIII) 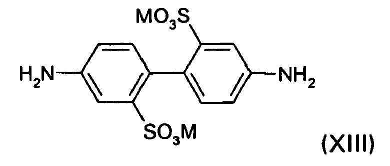 und einer Diazokomponente der allgemeinen Formel (XIV)
D¹-NH₂ (XIV)
worin M und D¹ wie in Anspruch 11 angegeben definiert sind, gemeinsam diazotiert und auf die Kupplungskomponente der allgemeinen Formel (XV) 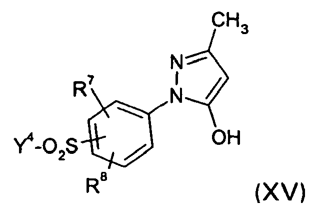 worin R⁷, R⁸ und y⁴ wie in Anspruch 11 angegeben definiert sind, gekuppelt wird und der Reaktionslösung gegebenenfalls weitere Farbstoffe der allgemeinen Formeln (V), (VI) und (IX) im gewünschten Verhältnis zugegeben werden.

## Claims

1. A process for mono-, di- or trichromatic dyeing and printing of natural and synthetic polyamide fiber materials, which comprises utilizing
a) a blue-dyeing dye mixture comprising at least one dye of the general formula (I) 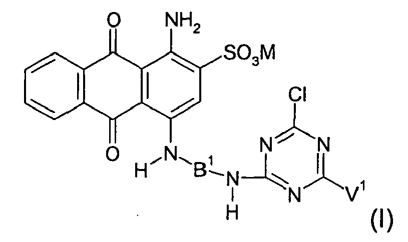 and at least one dye of the general formula (II) 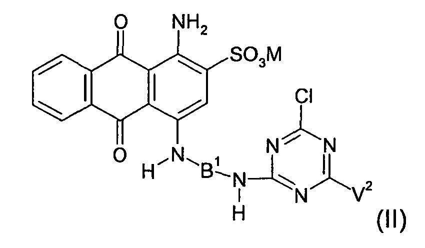 where
B¹ represents a group of the formula
-CH₂-CH₂-CH₂- , -CH₂-C(CH₃)₂-CH₂- 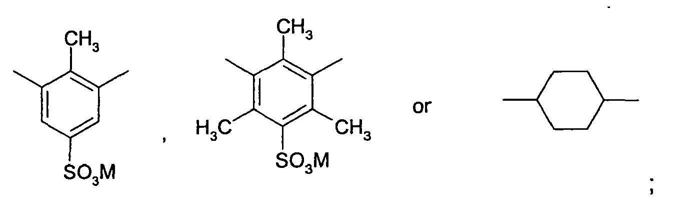
V¹ represents a group of the formula 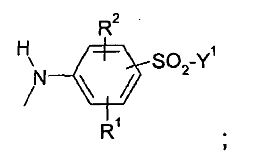
V² represents a group of the formula 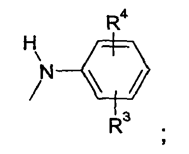
R¹, R² and R³ independently represent hydrogen, methyl, methoxy or chlorine;
R⁴ represents hydrogen or-SO₃M;
Y¹ represents vinyl or β-sulfatoethyl; and
M represents hydrogen, sodium or potassium;
and/or
b) a red-dyeing dye mixture comprising at least one dye of the general formula (III) 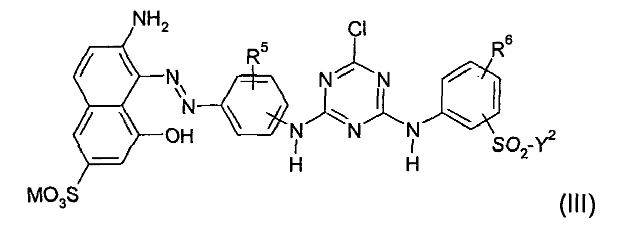 and at least one dye of the general formula (IV) 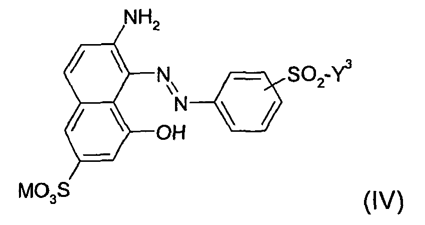 where
R⁵ represents hydrogen, -SO₃M, -COOM, methyl or chlorine;
R⁶ represents hydrogen, methyl or methoxy;
Y₂ and Y₃ independently represent vinyl or β-sulfatoethyl; and
M represents hydrogen, sodium or potassium;
and/or
c) a yellow-dyeing dye mixture comprising at least one dye of the general formula (V) 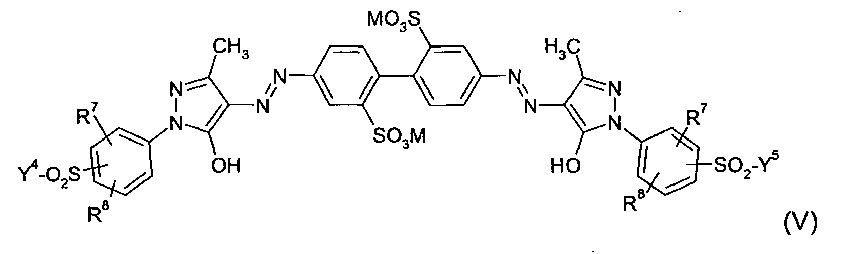 and at least one dye of the general formula (VI) 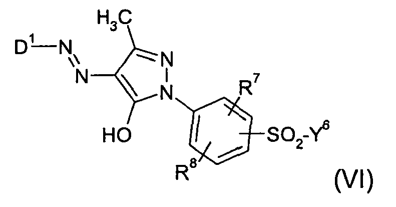
where
R⁷ and R⁸ represent hydrogen, methyl, methoxy or -SO₃M;
Y⁴, Y⁵ and Y⁶ independently represent vinyl or β-sulfatoethyl;
D¹ represents a group of the formula 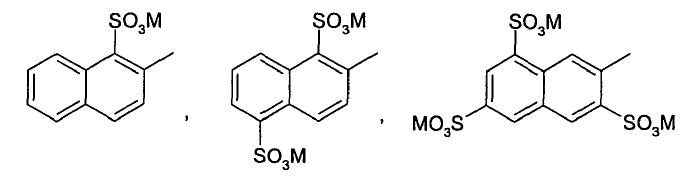 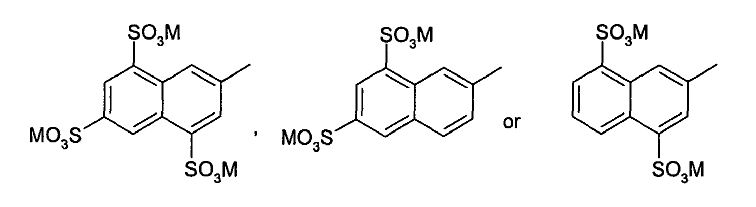 and
M represents hydrogen, sodium or potassium.

2. The process according to claim 1 wherein the blue-dyeing dye mixture a) as well as the dyes of the general formulae (I) and (II) further comprises a dye of the general formula (VII) 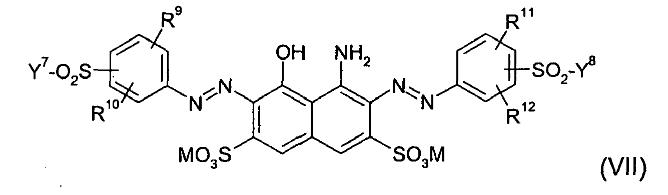 where
R⁹, R¹⁰, R¹¹ and R¹² independently represent hydrogen, methyl, methoxy or chlorine;
Y⁷ and Y⁸ independently represent vinyl or β-sulfatoethyl; and
M represents hydrogen, sodium or potassium.

3. The process according to claim 1 and/or 2 wherein the red-dyeing dye mixture b) as well as the dyes of the general formulae (III) and (IV) further comprises a dye of the general formula (VIII) 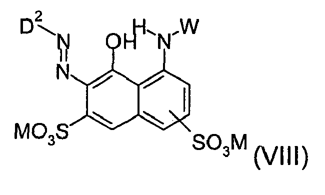 where
W represents a group of the formula 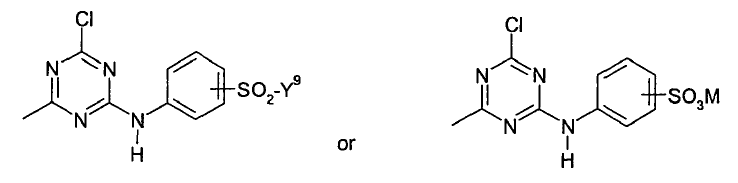 and may additionally represent a group of the formula 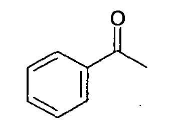
when D₂ comprises a fiber-reactive radical
Y⁹ represents vinyl or β-sulfatoethyl;
D² represents a group of the formula 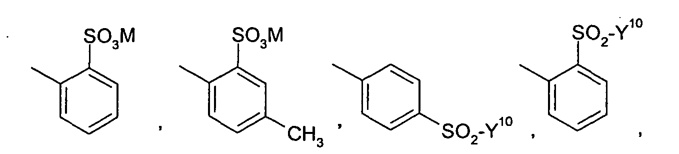 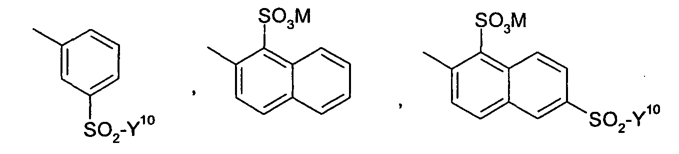 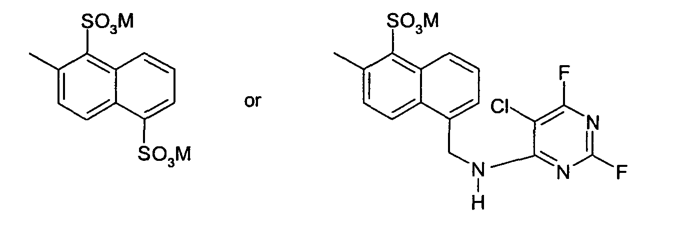 and
M represents hydrogen, sodium or potassium.

4. The process according to one or more of claims 1 to 3 wherein the yellow-dyeing dye mixture c) as well as the dyes of the general formulae (V) and (VI) further comprises a dye of the general formula (IX) 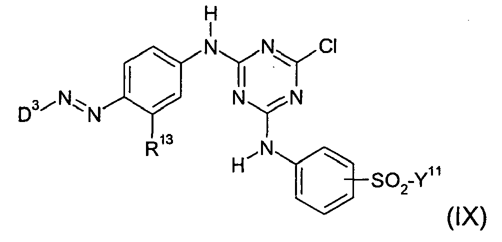 where
R¹³ represents (C₂-C₄)-alkanoylamino, ureido, sulfamoyl or acetyl;
Y¹¹ represents vinyl or β-sulfatoethyl; and
D³ has one of the meanings of D¹.

5. A blue-dyeing dye mixture comprising at least one dye of the general formula (I) 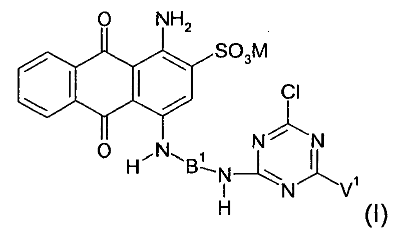 and at least one dye of the general formula (II) 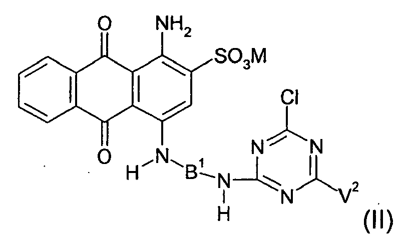 where
B¹ represents a group of the formula
-CH₂CH₂CH₂-, -CH₂-C(CH₃)₂CH₂- 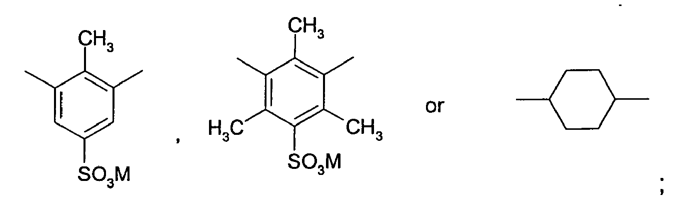
V¹ represents a group of the formula 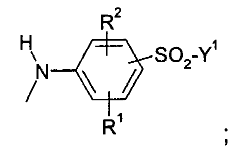
V² represents a group of the formula 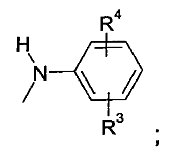
R¹, R² and R³ independently represent hydrogen, methyl, methoxy or chlorine;
R⁴ represents hydrogen or-SO₃M;
Y¹ represents vinyl or β-sulfatoethyl; and
M represents hydrogen, sodium or potassium.

6. The dye mixture according to claim 5 comprising a dye of the general formula (VII) 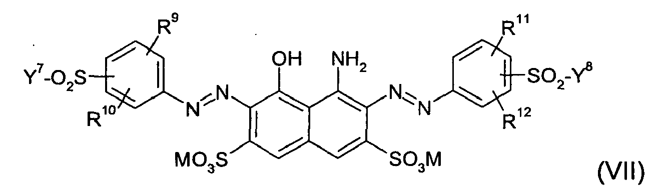 where
R⁹, R¹⁰, R¹¹ and R¹² independently represent hydrogen, methyl, methoxy or chlorine;
Y⁷ and Y⁸ independently represent vinyl or β-sulfatoethyl; and
M represents hydrogen, sodium or potassium.

7. The dye mixture of claim 5 and/or 6 comprising dyes of the general formulae (I), (II) and (VII) wherein the radicals R¹, R², R³, R⁹, R¹⁰, R¹¹ and R¹² represent hydrogen, R⁴ represents -SO₃M and B¹ represents a group of the formula

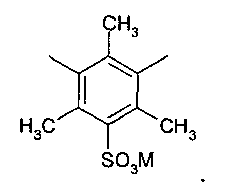

8. A red-dyeing dye mixture comprising at least one dye of the general formula (III) 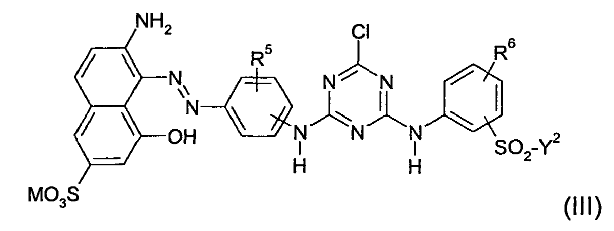 and at least one dye of the general formula (IV) 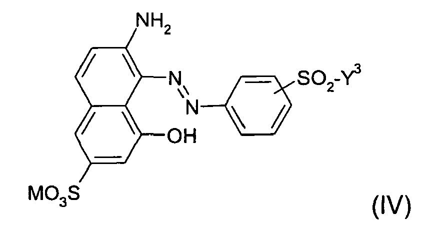 where
R⁵ represents hydrogen, -SO₃M, -COOM, methyl or chlorine;
R⁶ represents hydrogen, methyl or methoxy;
Y₂ and Y₃ independently represent vinyl or β-sulfatoethyl; and
M represents hydrogen, sodium or potassium.

9. The dye mixture according to claim 8 comprising a dye of the general formula (VIII) 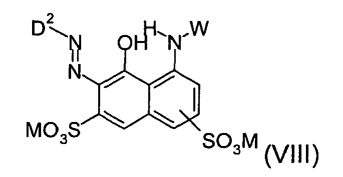 where
W represents a group of the formula 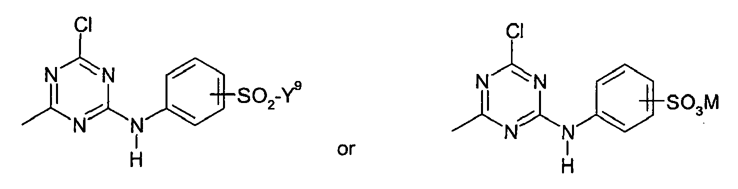 and may additionally represent a group of the formula 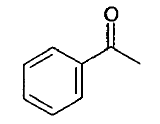
when D₂ comprises a fiber-reactive radical
Y⁹ represents vinyl or β-sulfatoethyl;
D² represents a group of the formula 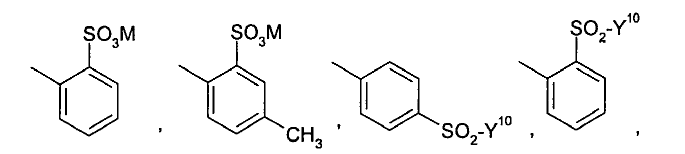 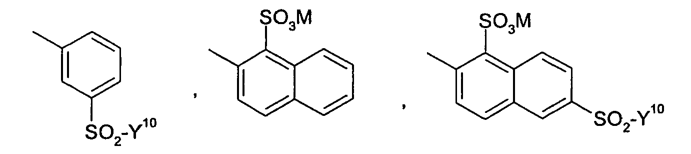 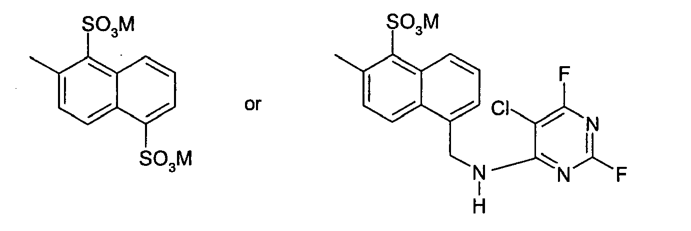 and
M represents hydrogen, sodium or potassium.

10. The dye mixture according to claim 8 and/or 9 comprising dyes of the general formulae (III), (IV) and (VIII) wherein R⁵ represents -SO₃M, R⁶ represents hydrogen,
W represents a group of the formula 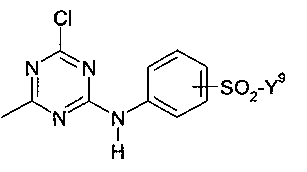
and D² represents a group of the formula 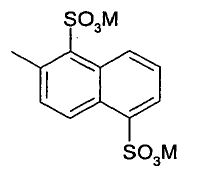
where Y⁹ represents vinyl or β-sulfatoethyl and M represents hydrogen, sodium or potassium.

11. A yellow-dyeing dye mixture comprising at least one dye of the general formula (V) 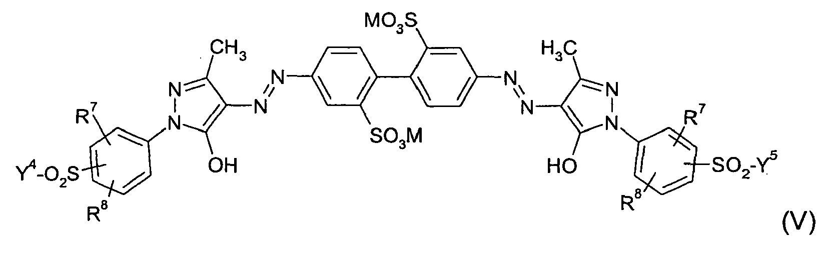 and at least one dye of the general formula (VI) 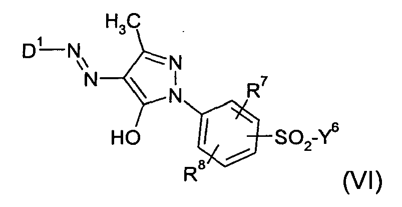 where
R⁷ and R⁸ represent hydrogen, methyl, methoxy or -SO₃M;
Y⁴, Y⁵ and Y⁶ independently represent vinyl or β-sulfatoethyl;
D¹ represents a group of the formula 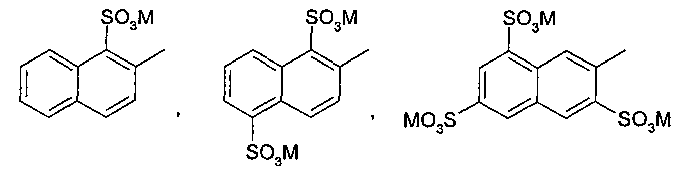 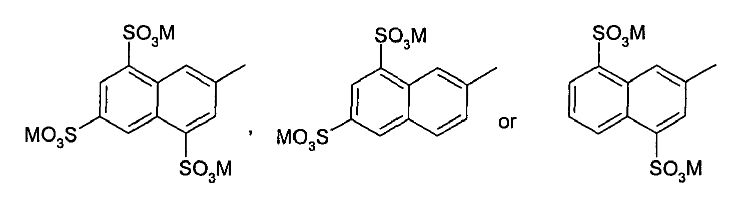 and
M represents hydrogen, sodium or potassium.

12. The dye mixture according to claim 11 comprising a dye of the general formula (IX) 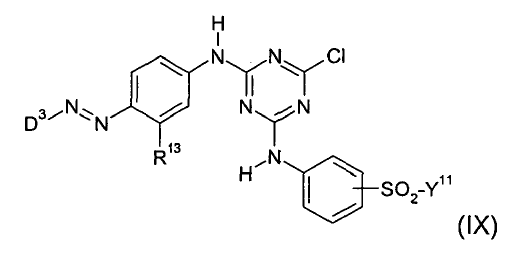 where
R¹³ represents (C₂-C₄)-alkanoylamino, ureido, sulfamoyl or acetyl;
Y¹¹ represents vinyl or β-sulfatoethyl; and
D³ has one of the meanings of D¹.

13. The dye mixture according to claim 11 and/or 12 comprising dyes of the general formulae (V) and (VI) wherein
R⁷ and R⁸ represent hydrogen;
Y⁴, Y⁵ and Y⁶ represent vinyl or β-sulfatoethyl;
D¹ represents a group of the formula 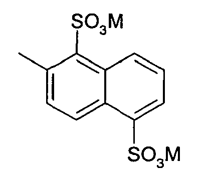 and
M represents hydrogen, sodium or potassium.

14. A process for preparing a dye mixture according to one or more of claims 5 to 13, which comprises mechanically mixing the individual dyes in the desired ratio.

15. A process for preparing a blue-dyeing dye mixture according to any of claims 5 to 7, which comprises reacting a compound of the general formula (XVI) 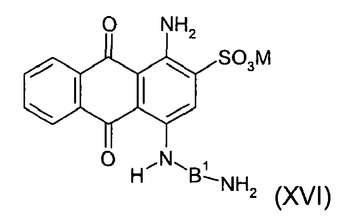 where B¹ and M are as defined in claim 5, with 1,3,5-trichlorotriazine to form a compound of the general formula (XVII) 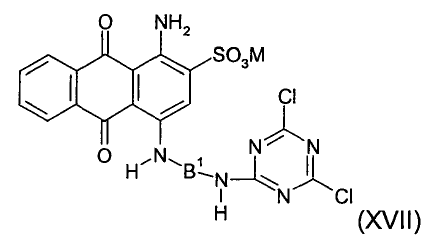 and further with a mixture in the desired mixing ratio of the compounds of the general formulae (XVIII) and (XIX)
H-V¹ (XVIII)
H-V² (XIX)
where V¹ and V² are as defined in claim 5, and if appropriate adding further dyes of the general formulae (I), (II) and (VIII) to the reaction solution in the desired ratio.

16. A process for preparing a red-dyeing dye mixture according to any of claims 8 to 10, which comprises a mixture of a diazo component of the general formula (X) 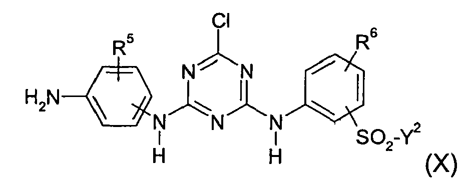 and of a diazo component of the general formula (XI) 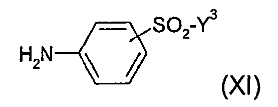 where R⁵, R⁶, Y² and Y³ are as defined in claim 8, being conjointly diazotized and coupled onto the coupling component of the formula (XII) 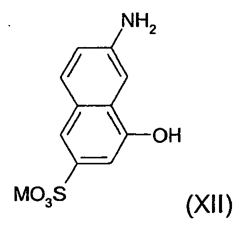 where M is as defined in claim 8, and if appropriate the reaction solution has further dyes of the general formulae (III), (IV) and (VIII) added to it in the desired ratio.

17. A process for preparing a yellow-dyeing dye mixture according to any of claims 11 to 13, which comprises a mixture of a diazo component of the general formula (XIII) 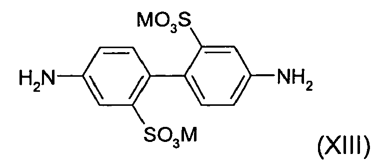 and of a diazo component of the general formula (XIV)
D¹-NH₂ (XIV)
where M and D¹ are as defined in claim 11, being conjointly diazotized and coupled onto the coupling component of the general formula (XV) 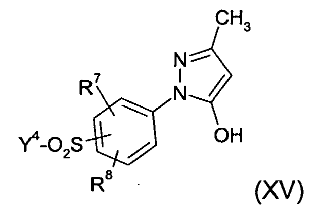 where R⁷, R⁸ and Y⁴ are as defined in claim 11, and if appropriate the reaction solution has further dyes of the general formulae (V), (VI) and (IX) added to it in the desired ratio.

## Revendications

1. Procédé pour la teinture et l'impression en monochromie, dichromie ou trichromie de matériaux naturels et synthétiques en fibres de polyamide, **caractérisé en ce qu'**on utilise
a) un mélange de colorants teignant en bleu contenant au moins un colorant de formule générale (I) 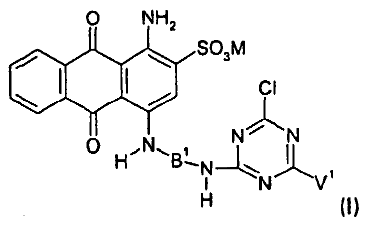 et au moins un colorant de formule générale (II) 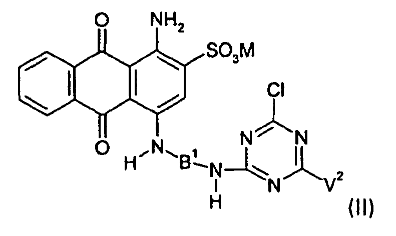 dans laquelle
B¹ représente un groupe de formule
-CH₂-CH₂-CH₂-, -CH₂-C(CH₃)₂-CH₂- 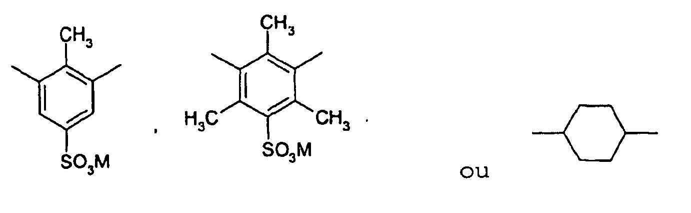
V¹ représente un groupe de formule 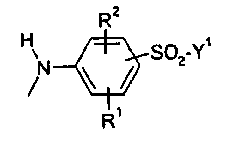
V² représente un groupe de formule 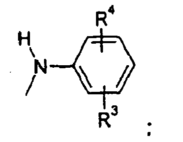
R¹, R² et R³ représentent, indépendamment l'un de l'autre, hydrogène, méthyle, méthoxy ou chlore ;
R⁴ représente hydrogène ou -SO₃M ;
Y¹ représente vinyle ou β-sulfatoéthyle ; et
M représente hydrogène, sodium ou potassium
et/ou
b) un mélange de colorants teignant en rouge contenant au moins un colorant de formule générale (III) 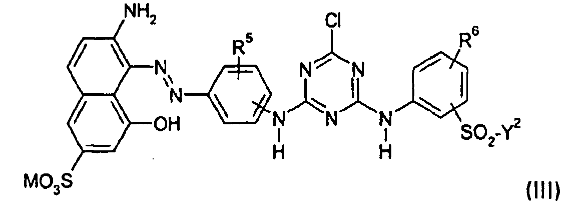 et au moins un colorant de formule générale (IV) 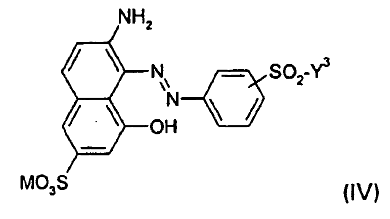 dans laquelle
R⁵ signifie hydrogène, -SO₃M, -COOM, méthyle, ou chlore ;
R⁶ signifie hydrogène, méthyle ou méthoxy ;
Y² et Y³ signifient, indépendamment l'un de l'autre, vinyle ou β-sulfatoéthyle ; et
M signifie hydrogène, sodium ou potassium
et/ou
c) un mélange de colorants teignant en jaune, contenant au moins un colorant de formule générale (V) 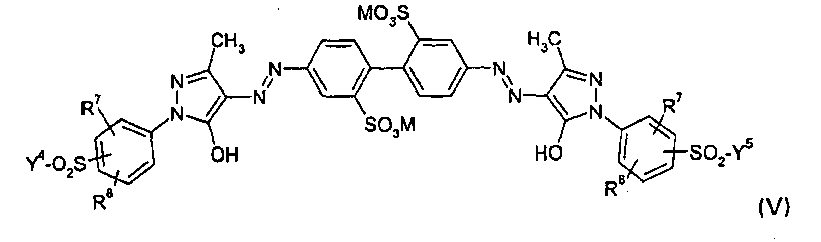 et au moins un colorant de formule générale (VI) 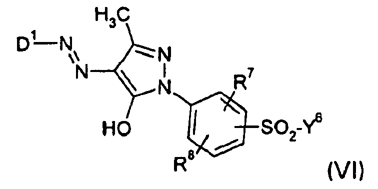 dans laquelle
R⁷ et R⁸ signifient hydrogène, méthyle, méthoxy ou -SO₃M ;
Y⁴ , Y⁵ et Y⁶ signifient, indépendamment l'un de l'autre, vinyle ou β-sulfatoéthyle ;
D¹ signifie un groupe de formule 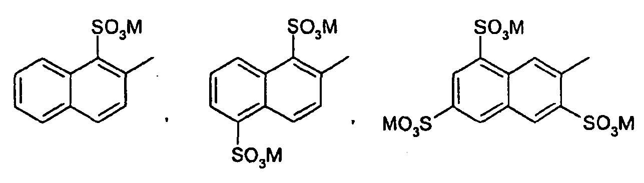 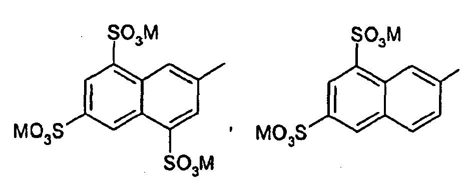 ou 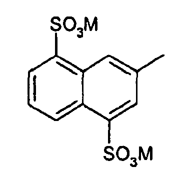
M signifie hydrogène, sodium ou potassium.

2. Procédé selon la revendication 1, **caractérisé en ce que** le mélange de colorants teignant en bleu a) contient, outre les colorants des formules générales (I) et (II), en plus un colorant de formule générale (VII) 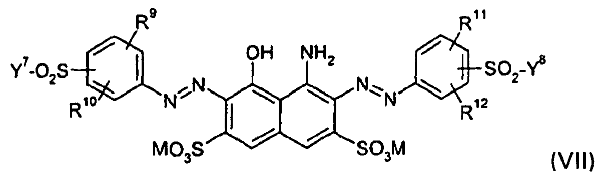 dans laquelle
R⁹, R¹⁰, R¹¹ et R¹² représentent, indépendamment l' un de l'autre, hydrogène, méthyle, méthoxy ou chlore ;
y⁷ et Y⁸ signifient, indépendamment l'un de l'autre, vinyle ou β-sulfatoéthyle ; et
M signifie hydrogène, sodium ou potassium.

3. Procédé selon la revendication 1 et/ou 2, **caractérisé en ce que** le mélange de colorants teignant en rouge b) contient, outre les colorants des formules générales (III) et (IV), en plus un colorant de formule générale (VIII) 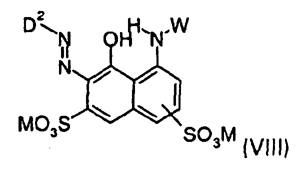 dans laquelle
W représente un groupe de formule 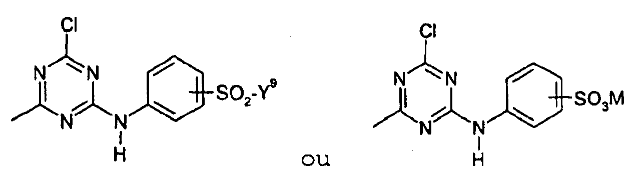 et, dans le cas où D² représenterait un radical réactif avec les fibres, il peut également représenter un groupe de formule 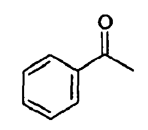
Y⁹ signifie vinyle ou β-sulfatoéthyle ;
D² représente un groupe de formule 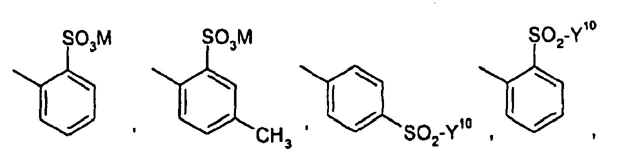 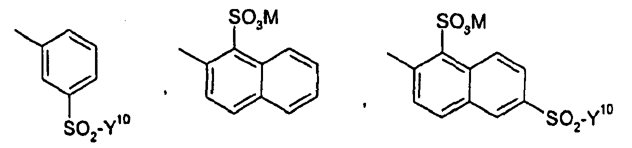 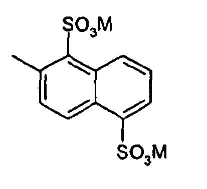 ou 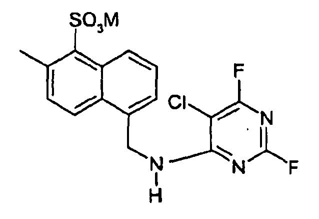 et
M signifie hydrogène, sodium ou potassium.

4. Procédé selon l'une ou plusieurs des revendications 1 à 3, **caractérisé en ce que** le mélange de colorants teignant en jaune c) contient, outre les colorants des formules générales (V) et (VI), en plus un colorant de formule générale (IX) 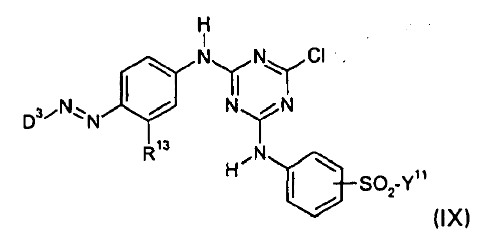 dans laquelle
R¹³ signifie (C₂-C₄)-alcanoylamino, uréido, sulfamoyle ou acétyle ;
Y¹¹ signifie vinyle ou β-sulfatoéthyle ; et
D³ présente une des significations de D¹.

5. Mélange de colorants teignant en bleu contenant au moins un colorant de formule générale (I) 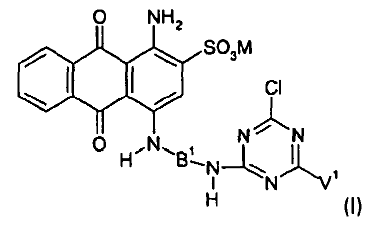 et au moins un colorant de formule générale (II) 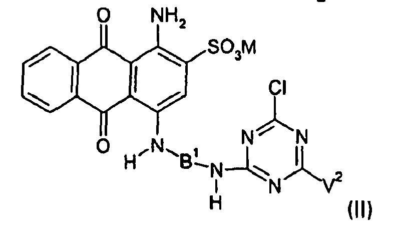 dans laquelle
B¹ représente un groupe de formule
-CH₂-CH₂-CH₂- , -CH₂-C(CH₃)₂-CH₂- 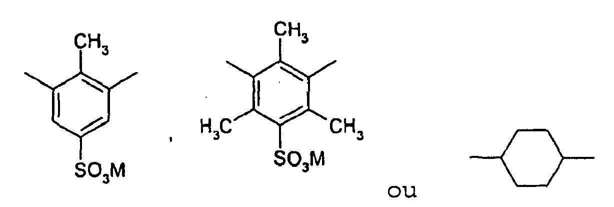
V¹ représente un groupe de formule 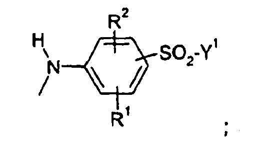
V² représente un groupe de formule 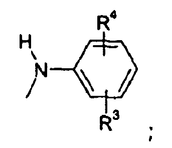
R¹, R² et R³ représentent, indépendamment l'un de l'autre, hydrogène, méthyle, méthoxy ou chlore ;
R⁴ représente hydrogène ou -SO₃M ;
Y¹ représente vinyle ou β-sulfatoéthyle; et
M représente hydrogène, sodium ou potassium.

6. Mélange de colorants selon la revendication 5, **caractérisé en ce qu'**il contient un colorant de formule générale (VII) 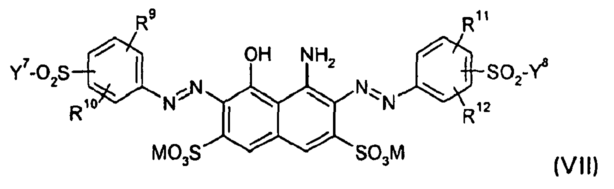 dans laquelle
R⁹, R¹⁰, R¹¹ et R¹² représentent, indépendamment l'un de l'autre, hydrogène, méthyle, méthoxy ou chlore ;
Y⁷ et Y⁸ signifient, indépendamment l'un de l'autre, vinyle ou β-sulfatoéthyle ; et
M signifie hydrogène, sodium ou potassium.

7. Mélange de colorants selon la revendication 5 et/ou 6, **caractérisé en ce qu'**il contient les colorants des formules générales (I), (II) et (VII), les radicaux R¹, R², R³, R⁹, R¹⁰, R¹¹ et R¹² signifiant hydrogène, R⁴ représentant -SO₃M et B¹ signifiant un groupe de formule

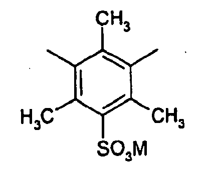

8. Mélange de colorants teignant en rouge contenant au moins un colorant de formule générale (III) 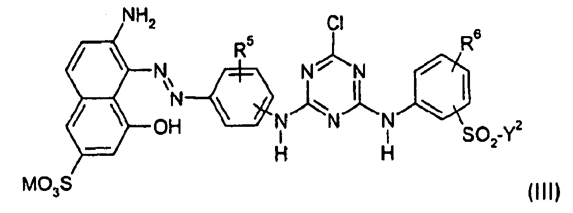 et au moins un colorant de formule générale (IV) 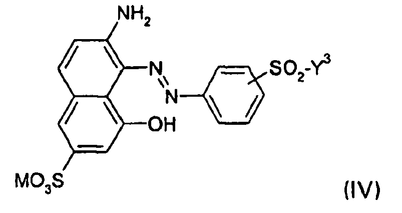 dans laquelle
R⁵ signifie hydrogène, -SO₃M, -COOM, méthyle, ou chlore ;
R⁶ signifie hydrogène, méthyle ou méthoxy ;
Y² et Y³ signifient, indépendamment l'un de l'autre, vinyle ou β-sulfatoéthyle; et
M signifie hydrogène, sodium ou potassium.

9. Mélange de colorants selon la revendication 8, **caractérisé en ce qu'**il contient un colorant de formule générale (VIII) 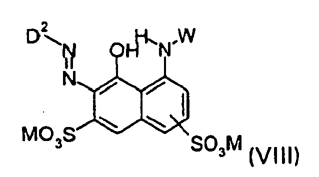 dans laquelle
W représente un groupe de formule 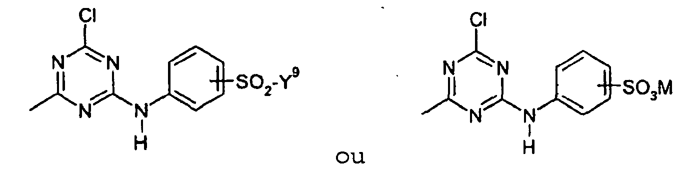 et, dans le cas où D² représenterait un radical réactif avec les fibres, il peut également représenter un groupe de formule 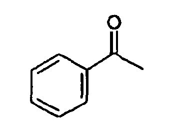
y⁹signifie vinyle ou β-sulfatoéthyle ;
D² représente un groupe de formule 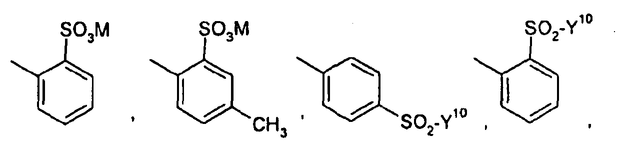 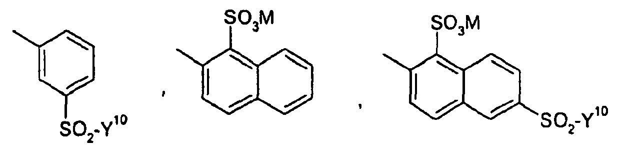 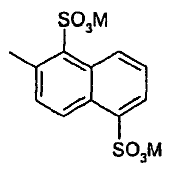 ou 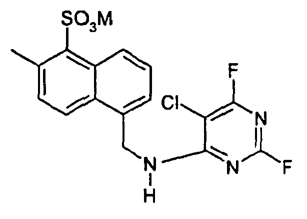 et
M signifie hydrogène, sodium ou potassium.

10. Mélange de colorants selon la revendication 8 et/ou 9, **caractérisé en ce qu'**il contient les colorants des formules générales (III), (IV) et (VIII), R⁵ signifiant -SO₃M et R⁶ signifiant hydrogène,
W représentant un groupe de formule 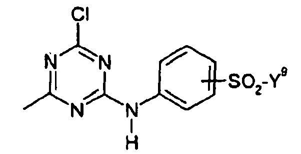
et D² représentant un groupe de formule 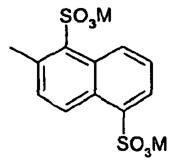
Y⁹ signifiant vinyle ou β-sulfatoéthyle et M signifiant hydrogène, sodium ou potassium.

11. Mélange de colorants teignant en jaune, contenant au moins un colorant de formule générale (V) 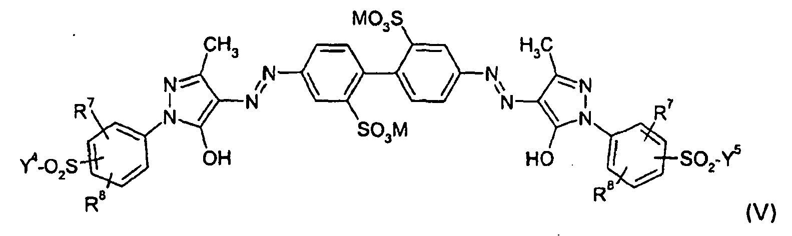 et au moins un colorant de formule générale (VI) 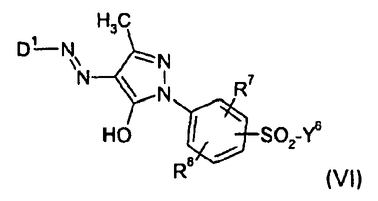 dans laquelle
R⁷ et R⁸ signifient hydrogène, méthyle, méthoxy ou -SO₃M ;
Y⁴, Y⁵ et Y⁶ signifient, indépendamment l'un de l'autre, vinyle ou β-sulfatoéthyle ;
D¹ signifie un groupe de formule 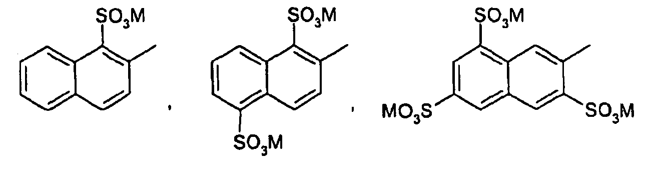 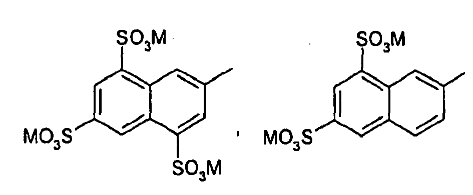 ou 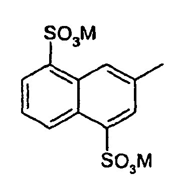 et
M signifie hydrogène, sodium ou potassium.

12. Mélange de colorants selon la revendication 11, **caractérisé en ce qu'**il contient un colorant de formule générale (IX) 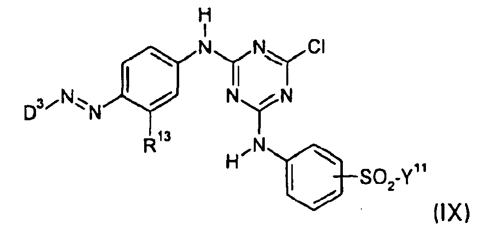 dans laquelle
R¹³ signifie (C₂-C₄)-alcanoylamino, uréido, sulfamoyle ou acétyle ;
Y¹¹ signifie vinyle ou β-sulfatoéthyle ; et
D³ présente une des significations de D¹.

13. Mélange de colorants selon la revendication 11 et/ou 12, **caractérisé en ce qu'**il contient les colorants des formules générales (V) et (VI),
R⁷ et R⁸ signifiant hydrogène ;
Y⁴ ,Y5 et Y⁶ signifiant vinyle ou β-sulfatoéthyle;
D¹ représentant un groupe de formule 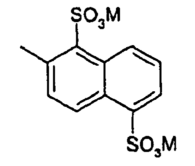 et
M signifiant hydrogène, sodium ou potassium.

14. Procédé pour la préparation d'un mélange de colorants selon l'une ou plusieurs des revendications 5 à 13, **caractérisé en ce que** les différents colorants sont mélangés mécaniquement dans le rapport souhaité.

15. Procédé pour la préparation d'un mélange de colorants teignant en bleu selon l'une quelconque des revendications 5 à 7, **caractérisé en ce qu'**on transforme un composé de formule générale (XVI) 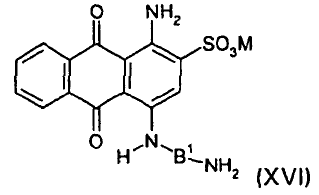 dans laquelle B¹ et M sont définis comme indiqué dans la revendication 5, avec de la 1,3,5-trichlorotriazine en un composé de formule générale (XVII) 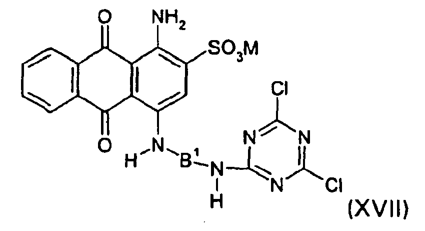 puis avec un mélange, dans le rapport de mélange souhaité, de composés des formules générales (XVIII) et (XIX)
H-V¹ (XVIII)
H-V² (XIX)
dans lesquelles V¹ et V² sont définis comme indiqué dans la revendication 5, puis on ajoute le cas échéant au mélange réactionnel d'autres colorants des formules générales (I), (II) et (VII) dans le rapport souhaité.

16. Procédé pour la préparation d'un mélange de colorants teignant en rouge selon l'une quelconque des revendications 8 à 10, **caractérisé en ce qu'**on soumet un mélange constitué par un composant diazo de formule générale (X) 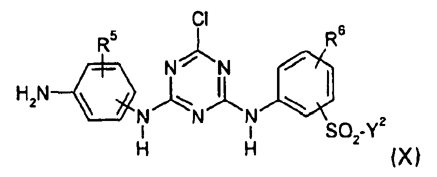 et par un composé diazo de formule générale (XI) 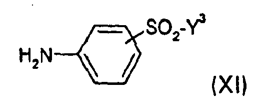 dans lesquelles R⁵, R⁶, Y² et Y³ sont définis comme indiqué dans la revendication 8, à une diazotation commune puis on couple sur le composant de couplage (XII) 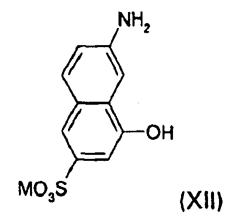 dans lequel M est défini comme indiqué dans la revendication 8 et on ajoute le cas échéant au mélange réactionnel d'autres colorants de formules générales (III), (IV) et (VIII) dans le rapport souhaité.

17. Procédé pour la préparation d'un mélange de colorants teignant en jaune selon l'une quelconque des revendications 11 à 13, **caractérisé en ce qu'**on soumet un mélange constitué par un composant diazo de formule générale (XIII) 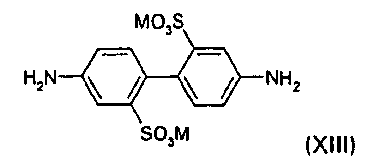 et par un composé diazo de formule générale (XIV)
D¹-NH₂ (XIV)
dans lesquelles M et D¹ sont définis comme indiqué dans la revendication 11, à une diazotation commune puis on couple sur le composant de couplage de formule générale (XV) 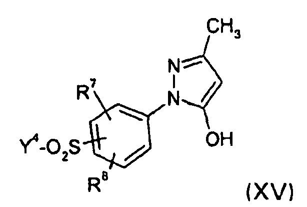 dans laquelle R⁷, R⁸ et Y⁴ sont définis comme indiqué dans la revendication 11 et on ajoute le cas échéant au mélange réactionnel d'autres colorants des formules générales (V), (VI) et (IX) dans le rapport souhaité.
